# EUROPEAN PATENT APPLICATION

(11) **EP 4 210 381 A1**
(43) Date of publication of application: **12.07.2023**
(21) Application number: 20957275.9
(22) Date of filing: 16.10.2020
(51) Int. Cl.: H04W 28/08, H04W 48/18

(54) **COMMUNICATION METHOD AND APPARATUS**

(71) Applicant: Huawei Technologies Co., Ltd., Shenzhen, Guangdong 518129 (CN)
(72) Inventor: LI, Zhuoming, Shenzhen, Guangdong 518129 (CN)
(74) Representative: Maiwald GmbH
(86) International application number: PCT/CN2020/121678
(87) International publication number: WO 2022/077497

(57) **Abstract**

Embodiments of this application provide a communication method and apparatus, and relate to the field of communication technologies. The method includes: A first network element determines a first quota, where the first network element is a network element in a visited public land mobile network VPLMN, and the first quota is related to a network slice identifier in the VPLMN and a public land mobile network PLMN identifier in a home public land mobile network HPLMN; the first network element determines a target PLMN identifier of a terminal device in the HPLMN based on a session-related request, where the session-related request includes a target network slice identifier and an identity of the terminal device; and the first network element determines a target quota from the first quota based on the target network slice identifier and the target PLMN identifier. In this way, when a quota is determined, frequent interaction between the VPLMN and the HPLMN is not required, thereby saving a network resource.

## Description

### TECHNICAL FIELD

This application relates to the field of communication technologies, and in particular, to a communication method and apparatus.

### BACKGROUND

With continuous development of mobile communication technologies, most operators split a unified infrastructure to obtain a plurality of virtual networks, thereby forming network slices. Use of the network slice implements sharing and isolation of a network resource. In a scenario of network slice running, a terminal may be a subscriber of a home public land mobile network (home public land mobile network, HPLMN), or may be a subscriber of a visited public land mobile network (visited public land mobile network, VPLMN). When the terminal is in a local area, the terminal may perform communication based on a service provided by the HPLMN. When the terminal is in a roaming area, the terminal may perform communication based on a service provided by the HPLMN and the VPLMN.

Usually, when the terminal uses a network slice in the roaming area, a network resource occupied when the network slice is running needs to be limited by using the HPLMN. For example, session establishment of the terminal in the network slice is controlled by using the HPLMN.

However, in a process in which the HPLMN controls the current session establishment, a relatively large quantity of network resources need to be occupied.

### SUMMARY

Embodiments of this application provide a communication method and apparatus, to control a resource of a roaming area based on a VPLMN. Specifically, a first network element in the VPLMN determines a first quota related to a network slice identifier in the VPLMN and a public land mobile network PLMN identifier in a home public land mobile network HPLMN, and the first network element determines a target PLMN identifier of a terminal device in the HPLMN based on a target network slice identifier and an identity of the terminal device. The first network element determines a target quota from the first quota based on the target network slice identifier and the target PLMN identifier. In this way, when a quota is determined, frequent interaction between the VPLMN and the HPLMN is not required, thereby saving a network resource.

In embodiments of this application, the first network element includes a PCF network element, an AMF network element, or an SMF network element; a second network element includes a UDM network element, a UDR network element, or an NWDAF network element; and a third network element includes a UPF network element.

According to a first aspect, an embodiment of this application provides a communication method, including: A first network element determines a first quota. The first network element is a network element in a visited public land mobile network VPLMN, and the first quota is related to a network slice identifier in the VPLMN and a public land mobile network PLMN identifier in a home public land mobile network HPLMN. The first network element determines a target PLMN identifier of a terminal device in the HPLMN based on a session-related request. The session-related request includes a target network slice identifier and an identity of the terminal device. The first network element determines a target quota from the first quota based on the target network slice identifier and the target PLMN identifier. In this way, when a quota is determined, frequent interaction between the VPLMN and the HPLMN is not required, thereby saving a network resource.

In a possible implementation, the first quota includes a first maximum session quantity and/or a first maximum data rate.

In a possible implementation, the first quota includes a plurality of groups of association relationships, the association relationship includes a relationship between the quota and each of the network slice identifier and the PLMN identifier, and the identity of the terminal device corresponds to one PLMN identifier.

In a possible implementation, the first network element receives the first quota from a second network element. The second network element includes an operation administration and maintenance OAM network element, or the second network element includes a quota control function. In this way, the first network element may determine, based on the first quota, whether the terminal device is controlled by service quota data.

In a possible implementation, the method further includes: The first network element sends the target network slice identifier and the target PLMN identifier to a third network element. The first network element receives an actual data rate corresponding to the target network slice identifier and the target PLMN identifier from the third network element. The first network element sends the actual data rate to the second network element. In this way, the third network element may process a session based on the actual data rate.

In a possible implementation, the method further includes: The first network element determines an actual session quantity corresponding to the target network slice identifier and the target PLMN identifier. The first network element determines, based on the target quota and the actual session quantity, to allow or reject the session-related request.

In a possible implementation, the method further includes: The first network element sends the actual session quantity to the second network element.

According to a second aspect, an embodiment of this application provides a communication method, including: A second network element determines a first quota of a first network element. The first network element is a network element in a visited public land mobile network VPLMN, and the first quota is related to a network slice identifier in the VPLMN and a public land mobile network PLMN identifier in a home public land mobile network HPLMN. The second network element sends the first quota to the first network element. In this way, when a quota is determined, frequent interaction between the VPLMN and the HPLMN is not required, thereby saving a network resource.

In a possible implementation, the first quota includes a maximum session quantity and/or a maximum data rate.

In a possible implementation, the first quota includes a plurality of groups of association relationships, the association relationship includes a relationship between the quota and each of the network slice identifier and the PLMN identifier, and an identity of a terminal device corresponds to one PLMN identifier.

In a possible implementation, the method further includes: The second network element receives an actual data rate corresponding to a target network slice identifier and a PLMN identifier from a third network element. The second network element determines a second maximum data rate for the third network element based on the actual data rate. The second network element sends the second maximum data rate to the third network element. In this way, the second network element may obtain the second maximum data rate based on the actual data rate.

In a possible implementation, there are a plurality of third network elements, and the method includes: The second network element aggregates actual data rates of the plurality of third network elements to obtain an aggregated actual data rate. When the aggregated actual data rate reaches a proportion threshold of a first maximum data rate, the first network element determines the second maximum data rate for each third network element based on the actual data rate of each third network element. In this way, the third network element may process a session based on the second maximum data rate.

In a possible implementation, the method further includes: The second network element receives an actual session quantity corresponding to a target network slice identifier and a PLMN identifier from the first network element. The second network element determines a second maximum session quantity for the third network element based on the actual session quantity. The second network element sends the second maximum session quantity to the first network element. In this way, the first network element may allow or reject session establishment based on the second maximum session quantity.

According to a third aspect, an embodiment of this application provides a communication method, including: A third network element receives a target network slice identifier and a target PLMN identifier from a first network element. The first network element is a network element in a visited public land mobile network VPLMN, and the target PLMN identifier is an identifier of a terminal device in a home public land mobile network HPLMN. The third network element collects statistics about an actual data rate corresponding to the target network slice identifier and the target PLMN identifier. The third network element sends the actual data rate to a second network element. The third network element receives a second maximum data rate from the second network element. The maximum data rate is related to the actual data rate. The third network element performs session processing based on the second maximum data rate. In this way, when a quota is determined, frequent interaction between the VPLMN and the HPLMN is not required, thereby saving a network resource.

In a possible implementation, when a data rate of a session exceeds the second maximum data rate, the third network element discards some packets.

According to a fourth aspect, an embodiment of this application provides a communication apparatus. The communication apparatus may be a first network element, or may be a chip or a chip system in a first network element. The communication apparatus may include a processing unit and a communication unit. When the communication apparatus is the first network element, the processing unit may be a processor, and the communication unit may be a communication interface or an interface circuit. The communication apparatus may further include a storage unit, and the storage unit may be a memory. The storage unit is configured to store instructions, and the processing unit executes the instructions stored in the storage unit, so that the first network element is enabled to implement the communication method described in any one of the first aspect or the possible implementations according to the first aspect. When the communication apparatus is the chip or the chip system in the first network element, the processing unit may be a processor, and the communication unit may be a communication interface. For example, the communication interface may be an input/output interface, a pin, or a circuit. The processing unit executes the instructions stored in the storage unit, so that the first network element is enabled to implement the communication method described in any one of the first aspect or the possible implementations according to the first aspect. The storage unit may be a storage unit (for example, a register or a cache) in the chip, or may be a storage unit (for example, a read-only memory or a random access memory) that is in the first network element and that is outside the chip.

For example, the processing unit is configured to determine a first quota. The first network element is a network element in a visited public land mobile network VPLMN, and the first quota is related to a network slice identifier in the VPLMN and a public land mobile network PLMN identifier in a home public land mobile network HPLMN. The processing unit is configured to determine a target PLMN identifier of a terminal device in the HPLMN based on a session-related request. The session-related request includes a target network slice identifier and an identity of the terminal device. The processing unit is configured to determine a target quota from the first quota based on the target network slice identifier and the target PLMN identifier.

In a possible implementation, the first quota includes a first maximum session quantity and/or a first maximum data rate.

In a possible implementation, the first quota includes a plurality of groups of association relationships, the association relationship includes a relationship between the quota and each of the network slice identifier and the PLMN identifier, and the identity of the terminal device corresponds to one PLMN identifier.

In a possible implementation, the communication unit is specifically configured to receive the first quota from a second network element. The second network element includes an operation administration and maintenance OAM network element, or the second network element includes a quota control function.

In a possible implementation, the communication unit is specifically configured to send the target network slice identifier and the target PLMN identifier to a third network element. The communication unit is specifically configured to receive an actual data rate corresponding to the target network slice identifier and the target PLMN identifier from the third network element. The communication unit is specifically configured to send the actual data rate to the second network element.

In a possible implementation, the processing unit is specifically configured to determine an actual session quantity corresponding to the target network slice identifier and the target PLMN identifier. The processing unit is specifically configured to determine, based on the target quota and the actual session quantity, to allow or reject the session-related request.

In a possible implementation, the communication unit is specifically configured to send the actual session quantity to the second network element.

According to a fifth aspect, an embodiment of this application provides a communication apparatus. The communication apparatus may be a second network element, or may be a chip or a chip system in a second network element. The communication apparatus may include a processing unit and a communication unit. When the communication apparatus is the second network element, the processing unit may be a processor, and the communication unit may be a communication interface or an interface circuit. The communication apparatus may further include a storage unit, and the storage unit may be a memory. The storage unit is configured to store instructions, and the processing unit executes the instructions stored in the storage unit, so that the second network element is enabled to implement the communication method described in any one of the second aspect or the possible implementations according to the second aspect. When the communication apparatus is the chip or the chip system in the second network element, the processing unit may be a processor, and the communication unit may be a communication interface. For example, the communication interface may be an input/output interface, a pin, or a circuit. The processing unit executes the instructions stored in the storage unit, so that the second network element is enabled to implement the communication method described in any one of the second aspect or the possible implementations according to the second aspect. The storage unit may be a storage unit (for example, a register or a cache) in the chip, or may be a storage unit (for example, a read-only memory or a random access memory) that is in the second network element and that is outside the chip.

For example, the processing unit is configured to determine a first quota of a first network element. The first network element is a network element in a visited public land mobile network VPLMN, and the first quota is related to a network slice identifier in the VPLMN and a public land mobile network PLMN identifier in a home public land mobile network HPLMN. The communication unit is configured to send the first quota to the first network element.

In a possible implementation, the first quota includes a maximum session quantity and/or a maximum data rate.

In a possible implementation, the first quota includes a plurality of groups of association relationships, the association relationship includes a relationship between the quota and each of the network slice identifier and the PLMN identifier, and an identity of a terminal device corresponds to one PLMN identifier.

In a possible implementation, the communication unit is specifically configured to receive an actual data rate corresponding to a target network slice identifier and a PLMN identifier from a third network element. The processing unit is specifically configured to determine a second maximum data rate for the third network element based on the actual data rate. The communication unit is specifically configured to send the second maximum data rate to the third network element.

In a possible implementation, there are a plurality of third network elements, and the processing unit is specifically configured to: aggregate actual data rates of the plurality of third network elements to obtain an aggregated actual data rate; and when the aggregated actual data rate reaches a proportion threshold of a first maximum data rate, determine the second maximum data rate for each third network element based on the actual data rate of each third network element.

In a possible implementation, the communication unit is specifically configured to receive an actual session quantity corresponding to a target network slice identifier and a PLMN identifier from the first network element. The processing unit is specifically configured to determine a second maximum session quantity for the third network element based on the actual session quantity. The communication unit is specifically configured to send the second maximum session quantity to the first network element.

According to a sixth aspect, an embodiment of this application provides a communication apparatus. The communication apparatus may be a third network element, or may be a chip or a chip system in a third network element. The communication apparatus may include a processing unit and a communication unit. When the communication apparatus is the third network element, the processing unit may be a processor, and the communication unit may be a communication interface or an interface circuit. The communication apparatus may further include a storage unit, and the storage unit may be a memory. The storage unit is configured to store instructions, and the processing unit executes the instructions stored in the storage unit, so that the third network element is enabled to implement the communication method described in any one of the second aspect or the possible implementations according to the second aspect. When the communication apparatus is the chip or the chip system in the third network element, the processing unit may be a processor, and the communication unit may be a communication interface. For example, the communication interface may be an input/output interface, a pin, or a circuit. The processing unit executes the instructions stored in the storage unit, so that the third network element is enabled to implement the communication method described in any one of the second aspect or the possible implementations according to the second aspect. The storage unit may be a storage unit (for example, a register or a cache) in the chip, or may be a storage unit (for example, a read-only memory or a random access memory) that is in the third network element and that is outside the chip.

For example, the communication unit is configured to receive a target network slice identifier and a target PLMN identifier from a first network element. The first network element is a network element in a visited public land mobile network VPLMN, and the target PLMN identifier is an identifier of a terminal device in a home public land mobile network HPLMN. The processing unit is configured to collect statistics about an actual data rate corresponding to the target network slice identifier and the target PLMN identifier. The communication unit is configured to send the actual data rate to a second network element. The communication unit is configured to receive a second maximum data rate from the second network element. The maximum data rate is related to the actual data rate. The processing unit is configured for the third network element to perform session processing based on the second maximum data rate.

In a possible implementation, the processing unit is specifically configured to: when a data rate of a session exceeds the second maximum data rate, discard some packets.

According to a seventh aspect, an embodiment of this application provides a computer-readable storage medium. The computer-readable storage medium stores a computer program or instructions, and when the computer program or the instructions is/are run on a computer, the computer is enabled to perform the communication method described in the implementations according to the first aspect to the third aspect.

According to an eighth aspect, an embodiment of this application provides a computer program product including instructions. When the instructions are run on a computer, the computer is enabled to perform the communication method described in the implementations according to the first aspect to the third aspect.

According to a ninth aspect, an embodiment of this application provides a communication system. The system includes any one or more of the following: the communication apparatus described in the fourth aspect and the possible implementations according to the fourth aspect, the communication apparatus described in the fifth aspect and the possible implementations according to the fifth aspect, and the communication apparatus described in the sixth aspect and the possible implementations according to the sixth aspect.

According to a tenth aspect, an embodiment of this application provides a communication apparatus. The apparatus includes a processor and a storage medium, the storage medium stores instructions, and when the instructions are run by the processor, the communication method described in the implementations according to the first aspect to the third aspect is implemented.

According to an eleventh aspect, this application provides a chip or a chip system. The chip or the chip system includes at least one processor and a communication interface. The communication interface and the at least one processor are interconnected through a line. The at least one processor is configured to run a computer program or instructions, to perform the communication method described in the implementations according to the first aspect to the third aspect.

The communication interface in the chip may be an input/output interface, a pin, a circuit, or the like.

In a possible implementation, the chip or the chip system described in this application further includes at least one memory, and the at least one memory stores instructions. The memory may be a storage unit inside the chip, for example, a register or a cache, or may be a storage unit (for example, a read-only memory or a random access memory) of the chip.

It should be understood that, the fourth aspect to the eleventh aspect of this application correspond to the technical solutions of the first aspect to the third aspect of this application, and beneficial effects achieved by the aspects and corresponding feasible implementations are similar. Details are not described again.

### BRIEF DESCRIPTION OF DRAWINGS

FIG. 1 is a schematic flowchart of controlling session establishment based on an HPLMN in a conventional technology;
FIG. 2 is a schematic diagram of a network architecture according to an embodiment of this application;
FIG. 3 is a schematic diagram of allocating a maximum session quantity to a first network element according to an embodiment of this application;
FIG. 4 is a specific schematic flowchart of a communication method according to an embodiment of this application;
FIG. 5 is a schematic diagram of a specific communication procedure according to an embodiment of this application;
FIG. 6 is a schematic diagram of a specific communication procedure according to an embodiment of this application;
FIG. 7 is a schematic diagram of a specific communication procedure according to an embodiment of this application;
FIG. 8 is a specific schematic flowchart of a communication method according to an embodiment of this application;
FIG. 9A and FIG. 9B are a schematic diagram of a specific communication procedure according to an embodiment of this application;
FIG. 10A and FIG. 10B are a schematic diagram of a specific communication procedure according to an embodiment of this application;
FIG. 11A and FIG. 11B are a schematic diagram of a specific communication procedure according to an embodiment of this application;
FIG. 12 is a schematic diagram of a structure of a communication apparatus according to an embodiment of this application;
FIG. 13 is a schematic diagram of a hardware structure of a communication device according to an embodiment of this application; and
FIG. 14 is a schematic diagram of a structure of a chip according to an embodiment of this application.

### DESCRIPTION OF EMBODIMENTS

To clearly describe the technical solutions in embodiments of this application, terms such as "first" and "second" are used in embodiments of this application to distinguish between same items or similar items that provide basically same functions or purposes. For example, a first network element and a second network element are merely intended to distinguish between different network elements, and are not intended to limit a sequence thereof. A person skilled in the art may understand that the terms such as "first" and "second" do not limit a quantity or an execution sequence, and the terms such as "first" and "second" do not indicate a definite difference.

It should be noted that, in this application, words "for example" or "example" are used to represent giving an example, an illustration, or a description. Any embodiment or design scheme described as "for example" or "example" in this application should not be explained as being more preferred or having more advantages than another embodiment or design scheme. Exactly, use of the terms such as "for example" or "example" is intended to present a related concept in a specific manner.

In this application, "at least one" means one or more, and "a plurality of" means two or more. A term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

A network slice (network slice) is a logical network having a specific network feature, and is a key technology that meets a network differentiation requirement of a fifth generation (5th generation, 5G) mobile communication system proposed by the third generation partnership project (3rd generation partnership project, 3GPP). A 5G physical network can be abstractly divided into a plurality of network slices. The network slices each form an end-to-end logical network, and are logically isolated from each other. Therefore, the network slice is a logical network that has a specific network feature and that is obtained through division from a communication network of an operator. A service of each network slice (network slice) is usually identified by using a single-network slice selection assistance information (single-network slice selection assistance information, S-NSSAI). A 5G network selects a network slice for a service based on S-NSSAI carried in a terminal service request, and transmits service data of a customer in the selected network slice.

Generally, each operator allocates customized S-NSSAI. One value of customized S-NSSAI only identifies one network slice within a network of one operator. If a value of S-NSSAI to which the terminal subscribes in a home public land mobile network (home public land mobile network, HPLMN) is customized S-NSSAI (denoted as hS-NSSAI), when the terminal roams to the visited public land mobile network (visited public land mobile network, VPLMN), the hS-NSSAI is used to determine a network slice that the terminal is allowed to use in the VPLMN. Specifically, the terminal can only use corresponding valid S-NSSAI in the VPLMN (denoted as vS-NSSAI) to determine the network slice that the terminal is allowed to use in the VPLMN.

The terminal uses a subscription permanent identifier (subscription permanent identifier, SUPI) as an identity. Subscription information of the terminal in the HPLMN further includes information about a network slice to which the terminal subscribes, that is, one or more pieces of subscribed S-NSSAIs (Subscribed S-NSSAIs). For example, a terminal user is a subscriber of the HPLMN, uses, in a local area, a communication service provided by the HPLMN to which the terminal user belongs, and uses, in another area, a communication service provided by the VPLMN that has a roaming agreement with the HPLMN.

A scope of a communication service provided by an operator (operator, OP) is restricted by a license. Generally, the operator can provide a service only in a local area. If the operator provides a service in another roaming area, the operator needs to reach a roaming agreement with another operator. Because a third-party industry tenant, as a service provider (Service Provider, SP) (such as an internet of vehicles service provider), wants to provide services across a plurality of roaming areas, the third-party industry tenant subscribes to network slices from operators in roaming areas and provides application services (Application Service) for roaming terminal users. If the third-party industry tenant subscribes to the network slices from operators in the plurality of roaming areas, the operators each usually allocate non-standard S-NSSAI to the third-party industry tenant. In this case, a mapping relation between S-NSSAI in the HPLMN and S-NSSAI in the VPLMN needs to be determined.

To enable the terminal to obtain, in a roaming scenario, the valid S-NSSAI in the VPLMN corresponding to the S-NSSAI subscribed to by the terminal, network slice mapping information is configured on a network device (generally an NSSF) in the VPLMN based on a roaming agreement signed between the HPLMN and the VPLMN. Furthermore, in a process in which the terminal registers with the VPLMN, the network device in the VPLMN may obtain the corresponding valid vS-NSSAI in the VPLMN by using the configured network slice mapping information in combination with the hS-NSSAI subscribed to by the terminal, to determine a network slice that is allowed to be used by the terminal in the VPLMN.

The roaming agreement signed between the VPLMN and the HPLMN includes the valid S-NSSAI in the VPLMN corresponding to the S-NSSAI subscribed to by the terminal. If the terminal can use a network slice identified by customized S-NSSAI in the HPLMN, and the VPLMN can provide a same or similar network slice that meets a requirement of a related communication service, when the roaming agreement is signed between the HPLMN and the VPLMN, the S-NSSAI of the two network slices is mapped together, that is, the hS-NSSAI is mapped to the vS-NSSAI.

When the terminal performs network registration and initiates a session connection in the VPLMN, the terminal needs to use the vS-NSSAI corresponding to the hS-NSSAI. After the UE is registered successfully, one or more network slices that are currently allowed to be accessed are also identified by the vS-NSSAI. In addition, the UE obtains a mapping relation between the vS-NSSAI and the hS-NSSAI. When performing communication, the UE sends a session establishment request message to an access and mobility management function (access and mobility management function, AMF) network element by using an access network (access network, AN). The session establishment request message needs to carry the S-NSSAI to indicate a network slice in which a session is established. The AMF network element selects a VPLMN network session management function (session management function, SMF) instance based on the vS-NSSAI carried in the session establishment request message. If possible, the AMF network element further selects an HPLMN SMF instance based on the hS-NSSAI. The AMF network element forwards the session establishment request message to a selected SMF network element. After receiving the session establishment request message, the SMF network element performs processing, selects a proper user plane function (user plane function, UPF) network element, and controls the UPF network element to establish a packet data unit session (packet data unit session, PDU Session). A service packet of the terminal may be transmitted to a destination data network by using the access network and the UPF network element.

When an operator establishes a network slice for a customer based on a customer order, the operator and the customer usually determine some technical indicators of the network slice based on an actual service requirement. A scale of the network slice is usually determined by these technical indicators. Scales of network slices subscribed by different customers are usually different, and most common scale parameters include a maximum session quantity and a maximum data rate of the network slice. The maximum session quantity of the network slice is a maximum quantity of PDU sessions allowed to access the network slice. The maximum data rate of the network slice is a maximum value of a sum of transmission rates of data transmitted by all PDU sessions that are transmitted by using the network slice, that is, a maximum value of a network bandwidth allowed to be occupied by all services transmitted by all the PDU sessions accessing to the network slice. The maximum data rate of the network slice is classified into two directions: an uplink (up link, UL) direction and a downlink (down link, DL) direction. The uplink direction indicates a service transmission direction from the terminal to a network side, and the downlink direction indicates a service transmission direction from the network to the terminal. The uplink and downlink directions may be controlled together, or may be controlled separately, or may be controlled only in one direction.

During running of the network slice, the operator needs to restrict a slice user from using a network resource beyond a specified range. Generally, the HPLMN controls a session quantity or a maximum data rate established in the network slice. However, when there are a large quantity of roaming subscribers, the VPLMN also needs to restrict, based on a roaming agreement, a terminal in an HPLMN to establish an excessive number of sessions or occupy excessive data rates in the VPLMN. That is, the VPLMN needs to control the session quantity established by the roaming terminal or used data rate to not exceed a scale parameter allowed by the roaming agreement signed with the HPLMN.

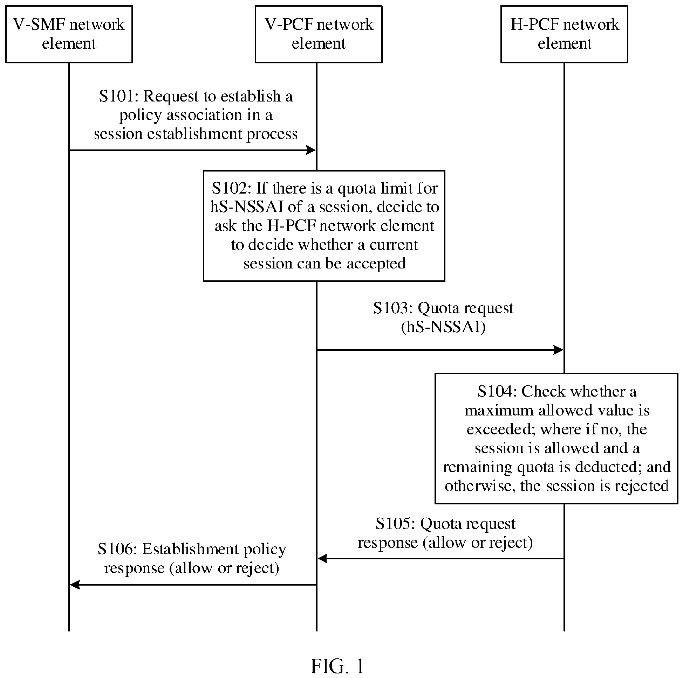

For example, FIG. 1 is a schematic flowchart of controlling session establishment based on an HPLMN. As shown in FIG. 1, when a terminal roams to a VPLMN, a process of controlling session establishment by the HPLMN may include the following steps.

S101: A V-SMF network element requests, in a session request process, a V-PCF network element to establish a policy association.

In embodiments of this application, when the terminal device establishes a PDU session in the VPLMN, a policy control function PCF network element in the VPLMN may be referred to as a V-PCF network element, and a session management function SMF network element in the VPLMN may be referred to as a V-SMF network element. The V-SMF network element sends a session management policy control request to the V-PCF network element. The request information may carry an identifier hS-NSSAI of a network slice in the HPLMN.

S102: The V-PCF network element determines whether there is a quota limit for hS-NSSAI of a session.

In embodiments of this application, the V-PCF network element determines whether there is the quota limit for the hS-NSSAI carried in the session. When there is the quota limit for the hS-NSSAI of the session, the V-PCF network element requests an H-PCF network element to determine whether the current session can be accepted. A policy control function PCF network element in the HPLMN may be referred to as the H-PCF network element.

S103: The V-PCF network element sends a quota request to the H-PCF network element.

In embodiments of this application, the request information of the quota carries the hS-NSSAI.

S104: The H-PCF network element determines whether a maximum allowed value is exceeded.

In embodiments of this application, the H-PCF network element records a currently established PDU session quantity after the terminal in the HPLMN roams to the VPLMN, and determines whether the PDU session quantity reaches or exceeds a maximum session quantity allowed for an HPLMN terminal to be established in the VPLMN specified in a roaming agreement.

When the PDU session quantity reaches or exceeds the maximum session quantity established by the terminal in the VPLMN, the H-PCF network element may reject granting a quota to the V-PCF, and the H-PCF sends a request for rejecting the quota to the V-PCF. When the PDU session quantity does not exceed the maximum session quantity established by the terminal in the VPLMN, the H-PCF may allow granting a quota to the V-PCF, and the H-PCF network element sends a request for allowing the quota to the V-PCF network element, and deducts a current remaining quota quantity.

S105: The H-PCF network element sends a quota request response (allow or reject) to the V-PCF network element.

In embodiments of this application, the H-PCF sends response information of quota request information to the V-PCF, and the response information carries a quota processing result of allowing or rejecting the quota.

S106: The V-PCF network element sends an establishment policy response (allow or reject) to the V-SMF network element.

In embodiments of this application, the V-PCF sends, to the V-SMF, response information for establishing a session management policy, and the response information carries a session processing result of allowing or rejecting establishment of the PDU session.

In the steps shown in S101 to S106, the HPLMN needs to be used to control the session quantity or the maximum data rate established in the VPLMN. However, one VPLMN may have terminals from a plurality of different HPLMNs, and the VPLMN needs to separately control, by using each HPLMN, a session quantity established or a data rate used by the terminal devices from the different HPLMNs, but the VPLMN cannot implement control by itself. As a result, after a network slice of the VPLMN is scaled out, if more roaming subscribers need to access the VPLMN, each HPLMN needs to be notified to modify a quantity of the controlled. In addition, when a large number of terminals performs communication, the VPLMN needs to frequently interact with a plurality of HPLMNs, and a large quantity of network resources are occupied, resulting in a poor communication effect.

Based on this, embodiments of this application provide a communication method, to control a resource of a roaming area based on a VPLMN. Specifically, a first network element in the VPLMN determines a first quota related to a network slice identifier in the VPLMN and a public land mobile network PLMN identifier in a home public land mobile network HPLMN, and the first network element determines a target PLMN identifier of a terminal device in the HPLMN based on a target network slice identifier and an identity of a terminal device. The first network element determines a target quota from the first quota based on the target network slice identifier and the target PLMN identifier. In this way, when a quota is determined, frequent interaction between the VPLMN and the HPLMN is not required, thereby saving a network resource.

The method in embodiments of this application may be applied to long term evolution (long term evolution, LTE), or may be applied to a fifth generation (5th generation, 5G) mobile communication system, or a future mobile communication system.

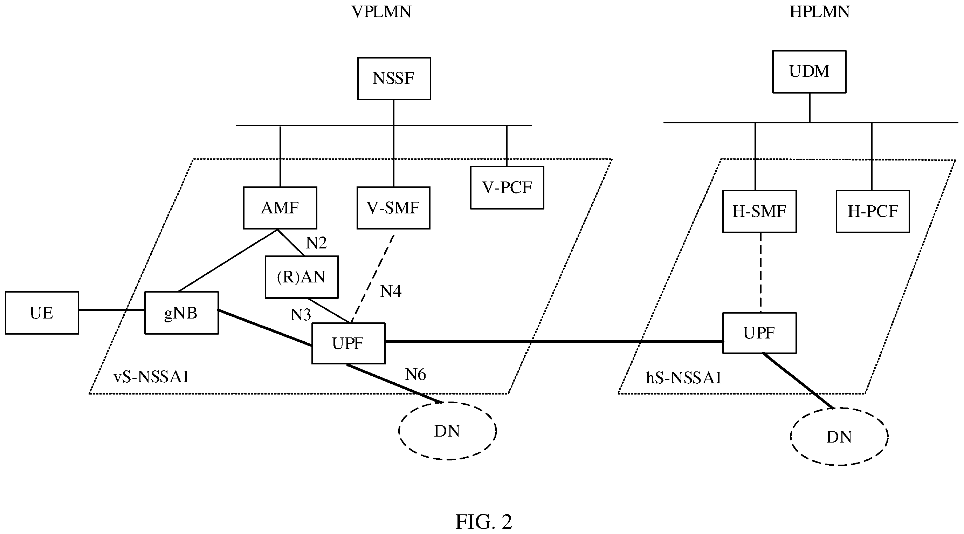

For example, FIG. 2 is a schematic diagram of a network architecture according to embodiments of this application.

The network architecture may include a terminal device (user equipment, UE), a (radio) access network ((radio) access network (R)AN), a core network (core network, CN) (not shown in FIG. 2), a data network (data network, DN), and the like.

The terminal device is a device having a wireless transceiver function, and may be deployed on the land, including an indoor or outdoor device, a hand-held device, a wearable device, or a vehicle-mounted device, or may be deployed on the water (for example, on a ship), or may be deployed in the air (for example, on a plane, a balloon, or a satellite). The terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. Sometimes, the terminal device may also be referred to as user equipment (user equipment, UE), a mobile station, a remote station, and the like. A specific technology, a device form, and a name that are used by the terminal device are not limited in embodiments of this application.

An AN device is used for wireless side access of the terminal device. The AN device may be deployed in forms, including a centralized unit (centralized unit, CU) and a distributed unit (distributed unit, DU) in a separate scenario and a single station scenario. In the separate scenario, the CU supports protocols such as a radio resource control (radio resource control, RRC) protocol, a packet data convergence protocol (packet data convergence protocol, PDCP), and a service data adaptation protocol (service data adaptation protocol, SDAP). The DU mainly supports a radio link control (radio link control, RLC) layer protocol, a media access control (media access control, MAC) layer protocol, and a physical layer protocol. In the single station scenario, a single station may include a (new radio Node, gNB), an evolved NodeB (evolved Node B, eNB), a radio network controller (radio network controller, RNC), a Node B (Node B, NB), a base station controller (base station controller, BSC), a base transceiver station (base transceiver station, BTS), a home base station, a base band unit (base band unit, BBU), and the like.

A CN device may include a management device and a gateway device. The management device is mainly configured to perform device registration, security authentication, mobility management, location management, and the like for the terminal device. The gateway device is mainly configured to establish a channel with the terminal device, and forward a data package between the terminal device and an external data network on the channel.

The DN may provide a data transmission service for the terminal, and may be a public data network (public data network, PDN) network, such as the internet (internet), or may be a local access data network (LADN, Local Access Data Network), such as a network of a mobile edge computing (MEC, Mobile Edge Computing) node. For example, an access network, a core network, and a data network in 5G are used as examples for description.

The access network in 5G may be a radio access network (radio access network, (R)AN). A (R)AN device in the 5G system may include a plurality of 5G-(R)AN nodes. The 5G-(R)AN node may include an access point (access point, AP) in a 3GPP access network or a non-3GPP access network such as a Wi-Fi network, a next-generation base station (which may be collectively referred to as a next-generation radio access network node (NG-RAN node). The next-generation base station includes a new radio nodeB (NR nodeB, gNB), a next-generation evolved NodeB (NG-eNB), a gNB in a form in which a central unit (central unit, CU) and a distributed unit (distributed unit, DU) are separated, and the like), a transmission reception point (transmission receive point, TRP), a transmission point (transmission point, TP), or another node.

The 5G core network (5G core/new generation core, 5GC/NGC) may include a plurality of function units, such as an access and mobility management function (access and mobility management function, AMF) network element, a session management function (session management function, SMF) network element, a user plane function (user plane function, UPF) network element, an authentication server function (authentication server function, AUSF) network element, a policy control function (policy control function, PCF) network element, an application function (application function, AF) network element, a unified data management function (unified data management, UDM) network element, a network slice selection function (network slice selection function, NSSF) network element, a network function (network element function, NEF) network element, and a network data analysis function (network data analytics function, NWDAF) network element.

The AMF network element is mainly used for attachment, mobility management, and tracking area update procedures of a terminal in a mobile network. The access management network element terminates a non-access stratum (non-access stratum, NAS) message, completes registration management, connection management, reachability management, tracking area list (tracking area list, TA list) allocation, mobility management, and the like, and transparently routes a session management (session management, SM) message to the session management network element.

The SMF network element is mainly responsible for session management, a dynamic host configuration protocol function, selection and control of a user plane function, and the like, for example, session establishment, modification, and release. A specific function is, for example, allocating an internet protocol (internet protocol, IP) address to a user, or selecting a user plane network element that provides a packet forwarding function. The SMF network element is mainly used for session management in the mobile network, such as session establishment, modification, and release. A specific function is, for example, allocating an internet protocol (internet protocol, IP) address to the terminal or selecting a user plane network element that provides a packet forwarding function.

The UPF network element is mainly responsible for externally connecting to a data network (data network, DN), data package routing and forwarding and packet filtering on a user plane, and performing functions related to quality of service (quality of service, QoS) control, such as forwarding and charging. The user plane network element may also be referred to as a protocol data unit (protocol data unit, PDU) session anchor (PDU session anchor, PSA).

The AUSF network element is mainly responsible for a terminal device authentication function and the like.

The PCF network element is mainly responsible for providing a unified policy framework for network behavior management, providing a policy rule of a control plane function, and obtaining registration information related to a policy decision, for example, a QoS policy and a slice selection policy. It should be noted that these function units may independently operate, or may be combined to implement some control functions, for example, access control and mobility management functions such as access authentication, security encryption, and location registration of the terminal device, and session management functions such as establishment, release, and change of a user plane transmission path.

The UDM network element is responsible for unified user data management, and is mainly used for storing user equipment subscription data, for example, storing subscription information and authentication/authorization information.

The NSSF network element is mainly used for selecting an appropriate network slice for a service of the terminal.

The AF network element is responsible for providing service related information for a 3GPP network, for example, used for affecting service routing, interacting with the PCF network element to perform policy control, and the like.

The NWDAF network element has at least one of the following functions: a data collection function, a data training function, a data inference function, and a data analysis result feedback function. The data collection function means that the NWDAF network element may collect data from a network element, a third-party service server, a terminal device, a network management system, or the like. The data may be used as input data of a data training or data inference function. The data training function means that the NWDAF network element performs offline data analysis training operation on a large amount of obtained input data, to obtain a corresponding data model, data rule, or data feature. The data inference function means that the NWDAF network element performs online inference based on the input data or inference data and obtains a data analysis result. The data analysis result feedback function may send the data analysis result to the network element, the third-party service server, the terminal device, or the network management system. The analysis result may assist the network in selecting a service quality parameter of the service, or assist the network in performing traffic routing, or assist the network in selecting a background traffic transmission policy, or the like.

The NWDAF network element may be an independently deployed network element, or may be colocated with or deployed together with another network element (for example, the AMF network element, the SMF network element, or the PCF network element), or may be understood as adding a function of the NWDAF network element to the another network element. This is not specifically limited in embodiments of this application.

Function units in the 5G system may communicate with each other through a next generation network (next generation, NG) interface. For example, the terminal device may transmit a control plane message to the AMF network element through an NG interface 1 (N1 for short, not shown in FIG. 2), the RAN device may establish a user plane communication connection to the UPF through an NG interface 3 (N3 for short) to establish a channel, and an AN/RAN device may establish a control plane signaling connection to the AMF network element through an NG interface 2 (N2 for short). The UPF network element may exchange information with the SMF network element through an NG interface 4 (N4 for short), the UPF network element may exchange user plane data with a data network DN through an NG interface 6 (N6 for short), the AMF network element may exchange information with the SMF network element through an NG interface 11 (N11 for short, not shown in FIG. 2), the SMF network element may exchange information with the PCF network element through an NG interface 7 (N7 for short, not shown in FIG. 2), and the AMF network element may exchange information with the AUSF network element through an NG interface 12 (N12 for short, not shown in FIG. 2).

The following describes terms described in embodiments of this application. It may be understood that the description is intended to explain embodiments of this application more clearly, and does not necessarily constitute a limitation on embodiments of this application.

A first network element described in embodiments of this application may be a core network element such as a PCF network element, an AMF network element, or an SMF network element in a VPLMN.

A second network element described in embodiments of this application may be another network element that implements a data management function, such as a UDM network element, a UDR network element, or an NWDAF network element.

A third network element described in embodiments of this application may be a UPF network element or the like.

A network slice described in embodiments of this application may be a logical network that has a specific network feature and that is obtained through division from a communication network of an operator. For example, the network slice may be the following three types: enhanced mobile broadband (enhanced mobile broadband, eMBB), ultra-reliable low latency communication (ultra-reliable low latency communication, URLLC), and enhanced machine type communication (enhanced machine type communication, eMTC).

Roaming described in embodiments of this application may be a function that an operator can still provide a service for a terminal user after the operator leaves a local area that is registered with and moves to another service area.

A maximum session quantity described in embodiments of this application may be a maximum allowed quantity of PDU sessions accessing to the network slice. The maximum session quantity may also be referred to as a maximum number of bearers (maximum number of bearers) or a maximum number of flows (maximum number of flows), for example, a quality of service flow (quality of service flow, QoS flow) quantity.

A maximum data rate described in embodiments of this application may be a maximum value of a sum of transmission rates of data transmitted by all PDU sessions that are transmitted by using the network slice, that is, a maximum value of network bandwidth that is allowed to be occupied by all services transmitted by all the PDU sessions accessing to the network slice. A maximum data rate of a network slice may be classified into two directions: an uplink (Up Link, UL) direction and a downlink (Down Link, DL) direction. The uplink direction indicates a service transmission direction from the terminal to a network side, and the downlink direction indicates a service transmission direction from the network to the terminal. The uplink and downlink directions may be controlled together, or may be controlled separately, or may be controlled only in one direction.

By using specific embodiments, the following describes in detail the technical solutions of this application and how to resolve the foregoing technical problem by using the technical solutions of this application. The following several specific embodiments may be implemented independently or combined with each other, and same or similar concepts or processes may not be repeatedly described in some embodiments.

An embodiment of this application provides a communication method, including the following steps.

S301: A first network element determines a first quota.

In this embodiment of this application, the first quota is related to a network slice identifier S-NSSAI in a VPLMN and a PLMN identifier (identity, ID) in an HPLMN.

For example, the first quota may include one or more groups of association relationships. A form of each group of association relationships may be S-NSSAI+PLMN ID+quota, where "+" represents an "AND" relationship, and S-NSSAI may be vS-NSSAI, or may be a combination of vS-NSSAI+hS-NSSAI. Alternatively, it may be understood that available quotas of roaming terminals from different HPLMNs are distinguished based on a combination of S-NSSAI+PLMN ID. In this way, the quota may be associated with the S-NSSAI and the PLMN ID, and subsequently, the first network element in the VPLMN may control session processing in the VPLMN based on the first quota.

In a possible implementation, the first quota may include another type of quota data such as a first maximum session quantity and/or a first maximum data rate. The first maximum session quantity is a maximum session quantity that can be established, by using the first network element, in the network slice identified by the S-NSSAI by all the terminals associated with the PLMN ID. The first maximum data rate is a maximum uplink and/or maximum downlink data rate that can be transmitted in total by all the PDU sessions that can be established, by all the terminals associated with the PLMN ID, in the network slice identified by the S-NSSAI by using the first network element. In this way, the first network element may subsequently control a session establishment process in the VPLMN based on the first maximum session quantity and/or the first maximum data rate. A specific control manner is described in subsequent embodiments. Details are not described herein.

In this embodiment of this application, a possible implementation of determining the first quota by the first network element is as follows: The first network element receives the first quota from an operation administration and maintenance (operation administration and maintenance, OAM network element).

For example, when the HPLMN and the VPLMN sign a roaming agreement for a network slice, a network slice of a PLMN identified by vS-NSSAI may be mapped to a network slice that is subscribed by UE in the HPLMN and that is identified by the hS-NSSAI. In addition, the roaming agreement may further specify a maximum quantity of PDU sessions that can be simultaneously established by a terminal roaming from the HPLMN and a maximum uplink and/or downlink data rate that can be supported by a network slice of the VPLMN. These determined scale parameters may be stored in an OAM entity or a service provisioning entity of the VPLMN. For example, the OAM entity may be a network slice management function, and the service provisioning entity may be a network slice order and a service management function. For ease of description, the OAM entity or the service provisioning entity is generally referred to as an OAM network element in the following.

The OAM network element may determine all first network elements responsible for a vS-NSSAI network slice, and then use, as overall service quota data, a maximum session quantity or a maximum data rate parameter that is allowed to be established by a terminal from a specific HPLMN. The overall service quota data of the network slice is divided into several first quotas based processing performance or a device capacity of each first network element, and then the allocated first quota is allocated to the corresponding first network element.

Alternatively, the OAM network element may configure the first quota for the first network element based on user setting.

Another possible implementation of determining the first quota by the first network element is as follows: The first network element receives a first quota from a quota control function network element. The quota control function network element may be a network element having a quota control function, for example, may include a UDR network element or an NWDAF network element.

For example, the roaming agreement specifies a maximum quantity of PDU sessions that can be simultaneously established by a terminal roaming from the HPLMN and a maximum uplink and/or downlink data rate that are supported by the network slice of the VPLMN. These determined scale parameters are configured in a quota control function entity (or referred to as a quota control function network element) in the VPLMN. The quota control function network element may determine all the first network elements responsible for the vS-NSSAI network slice, and then use, as overall service quota data, the maximum session quantity or the maximum data rate parameter that is allowed to be established by a terminal from a specific HPLMN. The overall service quota data of the network slice is divided into several first quotas based processing performance or a device capacity of each first network element, and then the allocated first quota is allocated to the corresponding first network element.

S302: The first network element determines a target PLMN identifier of the terminal device in the HPLMN based on a session-related request.

In this embodiment of this application, a session may be initiated by the terminal device, and the session-related request may include a network slice identifier (or referred to as vS-NSSAI) in the VPLMN and an identity (or referred to as an SUPI) of the terminal device. The SUPI may be associated with one PLMN ID. Therefore, the first network element may determine, by using the SUPI of the terminal device, the target PLMN identifier to which the terminal device belongs (or referred to as the target PLMN ID).

S303: The first network element determines a target quota from the first quota based on the target network slice identifier and the target PLMN identifier.

In this embodiment of this application, after determining the target network slice identifier and the target PLMN identifier, the first network element may match or search for, in the first quota, the target quota corresponding to the target network slice identifier and the target PLMN identifier. Subsequently, the first network element may perform quota control on a session quantity in the network slice by using the target quota.

In conclusion, the network element in the VPLMN may control a resource of the roaming area. Specifically, the first network element in the VPLMN determines the first quota related to the network slice identifier in the VPLMN and the PLMN identifier in the HPLMN, and the first network element determines the target PLMN identifier of the terminal device in the HPLMN based on the target network slice identifier and the identity of the terminal device. The first network element determines the target quota from the first quota based on the target network slice identifier and the target PLMN identifier. In this way, when a quota is determined, frequent interaction between the VPLMN and the HPLMN is not required, thereby saving a network resource.

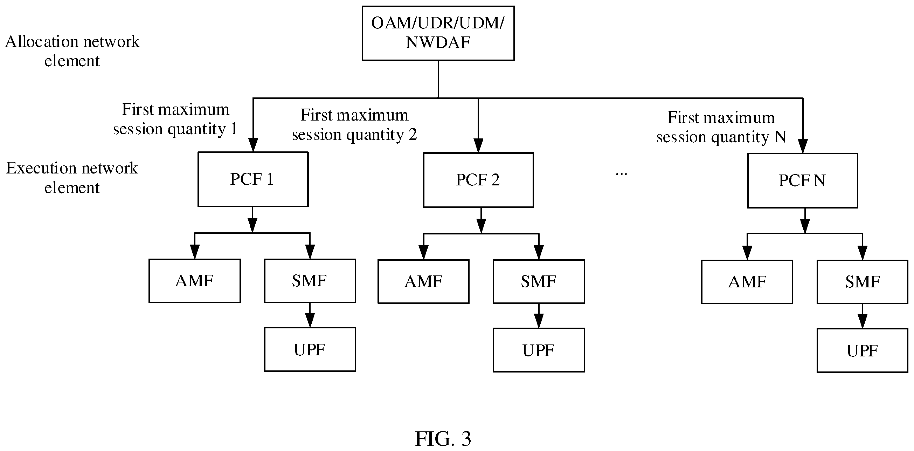

For example, FIG. 3 is a schematic diagram of allocating a maximum session quantity to a first network element according to an embodiment of this application.

As shown in FIG. 3, for a slice type identified by one piece of S-NSSAI, a maximum session quantity that can be accommodated may be configured on an operation administration and maintenance (operation administration and maintenance, OAM) network element, a unified data repository (unified data repository, UDR) network element, a unified data management UDM network element, a central PCF (center PCF, master PCF, or primary PCF) network element, or an NWDAF network element.

It is assumed that there are N sub-slices under the S-NSSAI. Generally, the sub-slices may be divided by using an area, a network slice instance, and the like. Each sub-slice includes one first network element (a PCF network element is used as an example for description subsequently) to control a maximum session quantity of a slice.

The OAM network element, the UDR network element, the UDM network element, or the NWDAF network element may divide the maximum session quantity into N first maximum session quantities, and then respectively allocate the first maximum session quantities to a PCF 1 network element, a PCF 2 network element, ..., and a PCF N network element. Then, the PCF 1 network element, the PCF 2 network element, ..., and the PCF N network element respectively perform slice access control or slice establishment session control based on the first maximum session quantities of the PCF 1 network element, the PCF 2 network element, ..., and the PCF N network element.

It can be learned that the maximum session quantity and the first maximum session quantity are controlled in a total-division mode (OAM/UDR/UDM/NWDAF-PCF, or Master PCF-PCF). A sum of a first maximum session quantity 1, a first maximum session quantity 2, ..., and a first maximum session quantity N is equal to or less than a (total) maximum session quantity.

For example, a sub-slice 1 corresponding to the S-NSSAI is used as an example. Initially, an actual session quantity (an actual quantity of PDU sessions, counter for current PDU sessions) of all UEs associated with the target PLMN identifier in the sub-slice 1 is zero. When session establishment control is performed in a slice, the UE sends a protocol data unit (protocol data unit, PDU) session (session) establishment request to the SMF 1 network element. The SMF 1 network element interacts with the PCF 1 network element to determine whether the UE can create a PDU session in the sub-slice 1 corresponding to the S-NSSAI. If the PCF 1 network element determines that an actual quantity of PDU sessions of all UEs associated with the target PLMN identifier in the current sub-slice 1 is close to or exceeds the first maximum session quantity 1, a PDU session establishment request of the UE in the sub-slice 1 is rejected. Otherwise, the PDU session establishment request of the UE in the sub-slice 1 is accepted. In this case, the quantity of PDU sessions associated with the target PLMN ID in the sub-slice 1 is increased by 1.

It may be understood that a manner of allocating the maximum data rate to the first network element is similar to a manner of allocating the maximum session quantity to the first network element. Details are not described herein again.

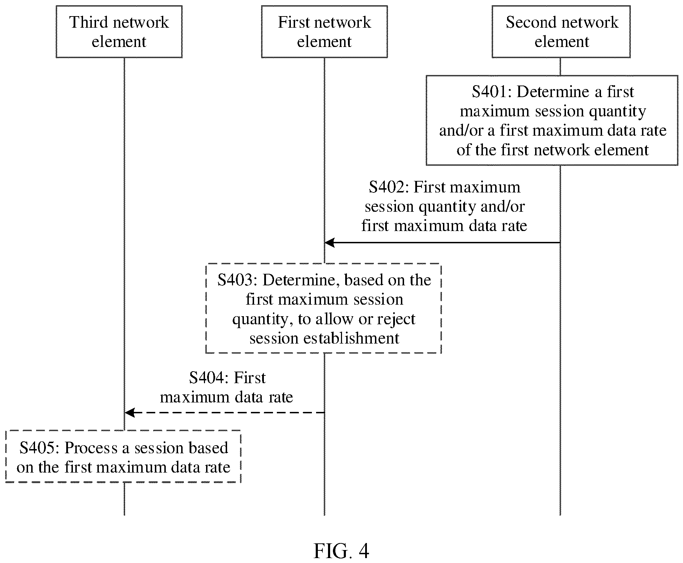

FIG. 4 is a specific schematic flowchart of a communication method according to an embodiment of this application. As shown in FIG. 4, the communication method includes the following steps.

S401: A second network element determines a first maximum session quantity and/or a first maximum data rate of a first network element.

For example, the second network element may determine each PCF entity in a vS-NSSAI network slice, and use, as overall service quota data, a first maximum session quantity and/or a first maximum data rate parameter that are/is allowed to be established by a terminal device from an HPLMN. The overall service quota data of the network slice is divided into several first quotas based processing performance or a device capacity of each network element, and then the allocated first quota is allocated to a corresponding first network element.

S402: The second network element sends the first maximum session quantity and/or the first maximum data rate to the first network element.

S403: The first network element determines, based on the first maximum session quantity, to allow or reject session establishment.

For example, the first network element may determine, based on the first maximum session quantity, whether the terminal device is controlled by the service quota data. For example, if a session quantity quota is exhausted or an established sessions quantity exceeds the first maximum session quantity, session establishment may be rejected; or if the session quantity quota does not exceed the first maximum session quantity, session establishment may be allowed, and one is subtracted from the first maximum session quantity quota.

S404: The first network element sends the first maximum data rate to a third network element.

S405: The third network element processes a session based on the first maximum data rate.

For example, the third network element controls a sum of rates of sessions of all UEs associated with a PLMN ID in a network slice identified by S-NSSAI to not exceed the first maximum data amount rate. If the sum of rates of all sessions exceeds the first maximum data rate, rate bandwidth of a PDU session that matches vS-NSSAI+PLMN ID and that is in the VPLMN is controlled.

For example, the third network element performs actual data rate limitation on an uplink data packet and/or a downlink data packet of the PDU session matching vS-NSSAI+PLMN ID. If the third network element determines that actual data rates of all PDU sessions with vS-NSSAI + PLMN IDs exceed a quota, the third network element first discards packets of a non-guaranteed bit rate (non-GBR) service of these PDU sessions. If the quota is still exceeded, the third network element may further continue to discard a packet that is in a data flow of a guaranteed bit rate (guaranteed bit rate, GBR) service and that exceeds a guaranteed flow bit rate (guaranteed flow bit rate, GFBR).

In conclusion, a resource of a roaming area may be controlled based on the first network element, the second network element, and the third network element in the VPLMN. Specifically, the second network element determines the first maximum session quantity and/or the first maximum data rate of the first network element, the second network element sends the first maximum session quantity and/or the first maximum data rate to the first network element, the first network element determines, based on the first maximum session quantity, to allow or reject session establishment, and the first network element sends the first maximum data rate to the third network element. In this way, when a quota is determined, frequent interaction between the VPLMN and the HPLMN is not required, thereby saving a network resource.

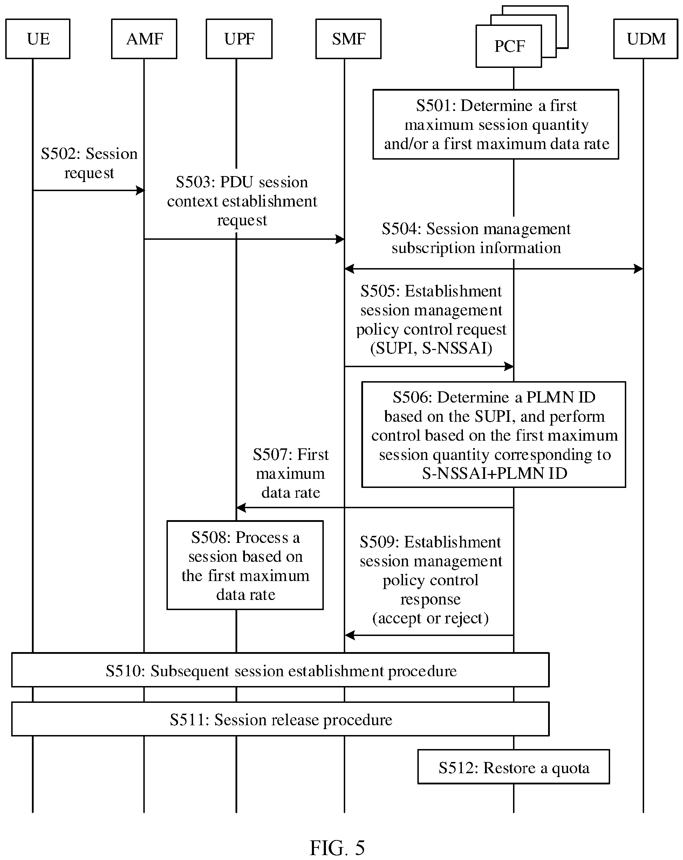

Based on the embodiment corresponding to FIG. 4, for example, the first network element is a PCF network element, and the third network element is a UPF network element. FIG. 5 is a schematic diagram of a specific communication procedure according to an embodiment of this application, including the following steps.

S501: The PCF network element determines a first maximum session quantity and/or a first maximum data rate.

S502: UE sends a session request to an AMF network element.

For example, the UE initiates the session request to the AMF network element by using a gNB. The session request may carry vS-NSSAI. The session may be another session such as a local breakout (local breakout, LBO) session or a home routed (home routed, HR) session. It may be understood that a type of a session is not limited in this embodiment of this application.

S503: The AMF network element sends a PDU session context establishment request to an SMF network element.

For example, the AMF network element selects and requests the SMF network element in a network slice to establish a PDU session management context of the terminal device. The PDU session (or referred to as a session) management context carries the vS-NSSAI.

S504: A UDM network element sends session management subscription information to the SMF network element.

S505: The SMF network element sends an establishment session management policy control request (SUPI, S-NSSAI) to the PCF network element.

For example, the SMF network element determines, from the session management subscription information, a PCF network element that processes a target network slice, and sends a message of the establishment session management policy control request to the first network element. The message carries the vS-NSSAI and an SUPI of the UE.

S506: The PCF network element determines a PLMN ID based on the SUPI, and performs control based on the first maximum session quantity corresponding to S-NSSAI+PLMN ID.

For example, the first network element determines, based on the SUPI of the UE, a PLMN ID to which the UE belongs. The SUPI may include mobile country code (mobile country code, MCC), mobile network code (mobile network code, MNC), and a user identifier part. The first network element may obtain the MCC and the MNC from the SUPI, and use a combination of MCC+MNC as the PLMN ID of the HPLMN to which the UE belongs.

The first network element may control a session establishment process based on the first maximum session quantity corresponding to the combination of vS-NSSAI+PLMN ID. The session establishment control process is described in S405. Details are not described herein again.

S507: The PCF network element sends the first maximum data rate to the UPF network element. The PCF network element may send the first maximum data rate to the UPF network element by using the SMF network element.

S508: The UPF network element processes the session based on the first maximum data rate.

S509: The PCF network element sends an establishment session management policy control response (accept or reject) to the SMF network element.

For example, the response message carries a processing result of allowing establishment of the PDU session or rejecting establishment of the PDU session that is obtained in S506.

S510: The UE, the AMF network element, the third network element, the SMF network element, and the PCF network element jointly perform a subsequent session establishment procedure.

For example, in the subsequent session processing procedure, the SMF network element returns a session context establishment response message to the AMF network element. The SMF network element may control the UPF network element through an N4 interface. The UPF transfers a service packet of the PDU session.

S511: The UE, the AMF network element, the third network element, the SMF network element, and the PCF network element jointly perform a session release procedure.

For example, the UE, the AMF network element, the third network element, the SMF network element, and the PCF network element terminate the session.

S512: The PCF network element restores the quota.

For example, the PCF restores a session quantity quota and a data rate quota that are corresponding to the combination of vS-NSSAI+PLMN ID and that are used by the PDU session.

It should be noted that S507 and S508 are optional steps. This is not specifically limited in this embodiment of this application.

In conclusion, the resource of the roaming area may be controlled based on the AMF network element, the third network element, the SMF network element, the PCF network element, and the UDM network element in the VPLMN. In this way, when a quota is determined, frequent interaction between the VPLMN and the HPLMN is not required, thereby saving a network resource.

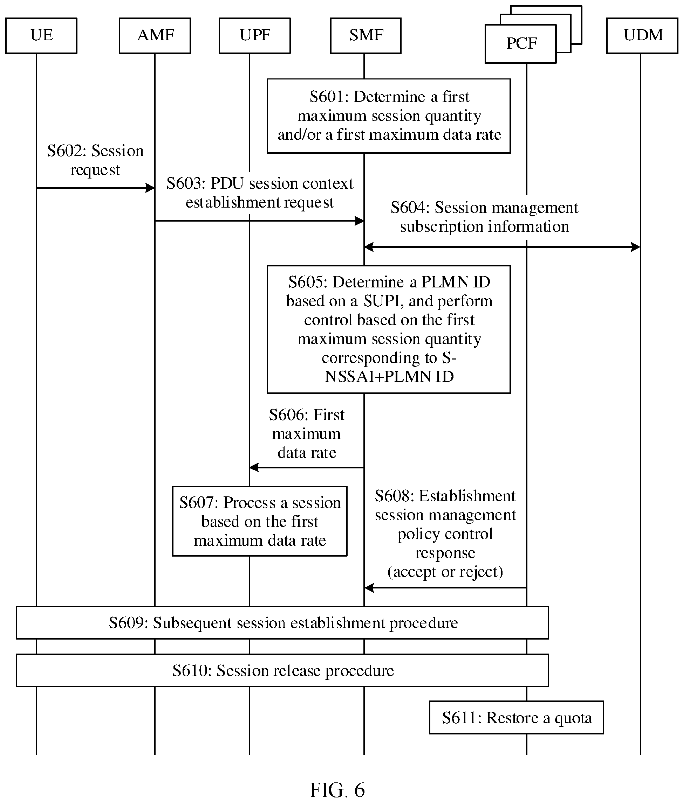

Based on the embodiment corresponding to FIG. 4, in a possible implementation, an example in which the first network element is an SMF network element and the third network element is a UPF network element is used. For example, FIG. 6 is a schematic diagram of a specific communication procedure according to an embodiment of this application, including the following steps.

S601: The SMF network element determines a first maximum session quantity and/or a first maximum data rate.

S602: UE sends a session request to an AMF network element.

S603: The AMF network element sends a PDU session context establishment request to SMF network element.

S604: A UDM network element sends session management subscription information to the SMF network element.

S605: The SMF network element determines a PLMN ID based on an SUPI, and performs control based on the first maximum session quantity corresponding to S-NSSAI+PLMN ID. Specifically, the SMF network element controls, based on the first maximum session quantity corresponding to the combination of vS-NSSAI+PLMN ID, whether to allow establishment of a PDU session. If the establishment is allowed, a subsequent step is performed. Otherwise, the AMF network element sends a response message for rejecting session establishment to the UE.

S606: The SMF network element sends the first maximum data rate to the third network element.

S607: The UPF network element processes the session based on the first maximum data rate.

S608: The PCF network element sends an establishment session management policy control response (accept or reject) to the SMF network element.

S609: The UE, the AMF network element, the third network element, the SMF network element, and the PCF network element jointly perform a subsequent session establishment procedure.

S610: The UE, the AMF network element, the third network element, the SMF network element, and the PCF network element jointly perform a session release procedure.

S611: The PCF network element restores the quota.

S601 to S604 in this embodiment of this application may correspond to records of S501 to S504 in FIG. 5, and S605 to S611 in this embodiment of this application may correspond to records of S506 to S512 in FIG. 5. Details are not described herein again. A difference from the embodiment in FIG. 4 is that, in FIG. 5, the PCF network element determines the first maximum session quantity and/or the first maximum data rate, and controls the session; and in FIG. 6, the SMF network element determines the first maximum session quantity and/or the first maximum data rate, and controls the session, and adaptively, an interaction procedure between network elements also changes accordingly.

In conclusion, the resource of the roaming area may be controlled based on the AMF network element, the third network element, the SMF network element, the PCF network element, and the UDM network element in the VPLMN. In this way, when a quota is determined, frequent interaction between the VPLMN and the HPLMN is not required, thereby saving a network resource.

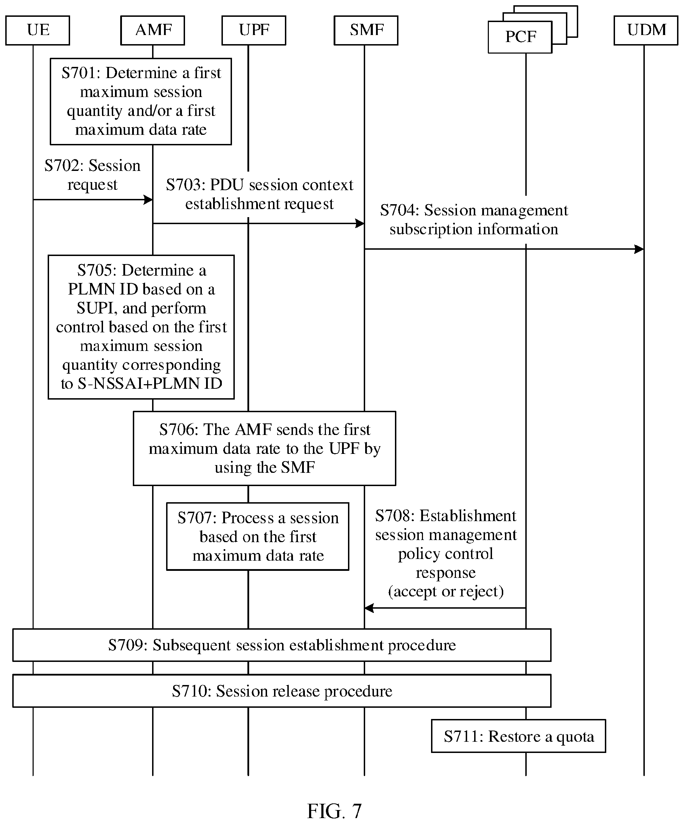

Based on the embodiment corresponding to FIG. 4, in a possible implementation, an example in which the first network element is an AMF network element and the third network element is a UPF network element is used. For example, FIG. 7 is a schematic diagram of a specific communication procedure according to an embodiment of this application, including the following steps.

S701: The AMF network element determines a first maximum session quantity and/or a first maximum data rate.

S702: UE sends a session request to the AMF network element.

S703: The AMF network element sends a PDU session context establishment request to an SMF network element.

S704: A UDM network element sends session management subscription information to the SMF network element.

S705: The AMF network element determines a PLMN ID based on an SUPI, and performs control based on the first maximum session quantity corresponding to S-NSSAI+PLMN ID. Specifically, the AMF network element controls, based on the first maximum session quantity corresponding to the combination of vS-NSSAI+PLMN ID, whether to allow establishment of a PDU session. If the establishment is allowed, a subsequent step is performed. Otherwise, the AMF network element sends a response message for rejecting session establishment to the UE.

S706: The AMF network element sends the first maximum data rate to the UPF network element by using the SMF network element.

S707: The UPF network element processes the session based on the first maximum data rate.

S708: The PCF network element sends an establishment session management policy control response (accept or reject) to the SMF network element.

S709: The UE, the AMF network element, the third network element, the SMF network element, and the PCF network element jointly perform a subsequent session establishment procedure.

S710: The UE, the AMF network element, the third network element, the SMF network element, and the PCF network element jointly perform a session release procedure.

S711: The PCF network element restores the quota.

S701 to S711 in this embodiment of this application may correspond to records of S601 to S611 in FIG. 6. Details are not described herein again. A difference from the embodiment in FIG. 6 is that, in FIG. 6, the SMF network element determines the first maximum session quantity and/or the first maximum data rate, and controls the session; and in FIG. 7, the AMF network element determines the first maximum session quantity and/or the first maximum data rate, and controls the session, and adaptively an interaction procedure between network elements also changes accordingly.

In conclusion, the resource of the roaming area may be controlled based on the AMF network element, the third network element, the SMF network element, the PCF network element, and the UDM network element in the VPLMN. In this way, when a quota is determined, frequent interaction between the VPLMN and the HPLMN is not required, thereby saving a network resource.

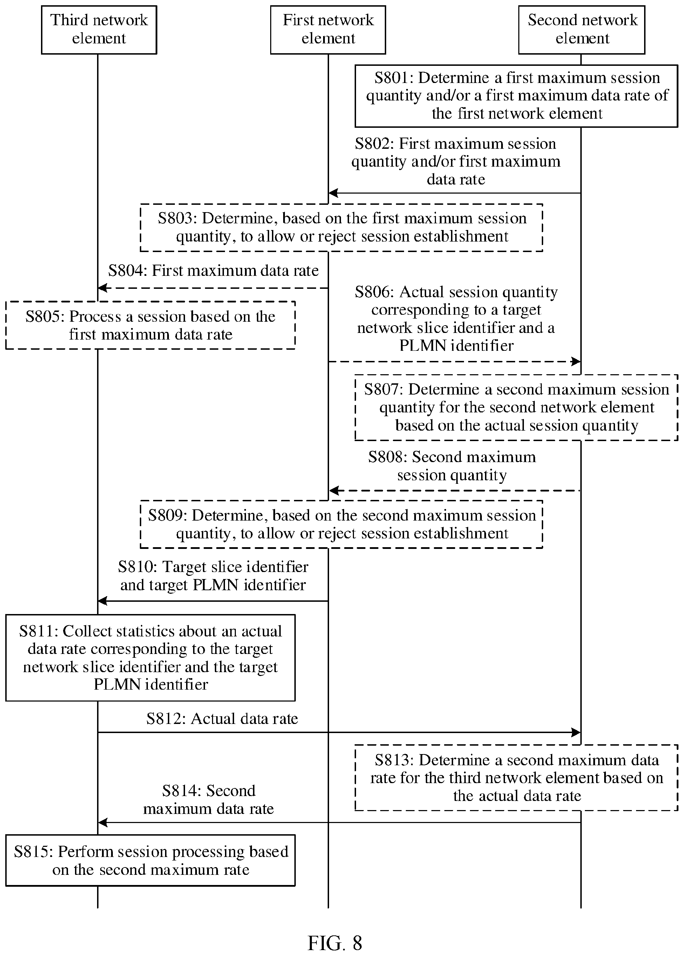

FIG. 8 is a specific schematic communication diagram of a communication method according to an embodiment of this application.

As shown in FIG. 8, the communication method may include the following steps.

S801: A second network element determines a first maximum session quantity and/or a first maximum data rate of a first network element.

For example, the second network element may be a quota control function network element. The quota control function network element may determine all first network elements responsible for a vS-NSSAI network slice, and then use, as overall service quota data, a maximum session quantity or a maximum data rate parameter that is allowed to be established by a terminal from a specific HPLMN. The overall service quota data of the network slice is divided into several first quotas based processing performance or a device capacity of each first network element, and then the allocated first quota is allocated to the corresponding first network element.

S802: The second network element sends the first maximum session quantity and/or the first maximum data rate to the first network element.

S803: The first network element determines, based on the first maximum session quantity, to allow or reject session establishment.

S804: The first network element sends the first maximum data rate to a third network element.

S805: The third network element processes a session based on the first maximum data rate.

S806: The first network element sends, to the second network element, an actual session quantity corresponding to a target network slice identifier and a PLMN identifier.

S807: The second network element determines a second maximum session quantity for the first network element based on the actual session quantity.

The second network element may aggregate the actual session quantity that is of a combination of vS-NSSAI+PLMN ID and that is sent by the first network element. The second network element may re-determine a second maximum session quantity for the first network element based on the actual session quantity of the first network element. For example, an additional part of a session quantity quota is allocated to a first network element that reports a relatively large actual quantity of sessions, and a less part of the session quantity quota is allocated to a first network element that reports a relatively small actual quantity of sessions.

S808: The second network element sends the second maximum session quantity to the first network element.

S809: The first network element determines, based on the second maximum session quantity, to allow or reject session establishment.

For example, the first network element may determine, based on the second maximum session quantity, whether a terminal device is controlled by a service quota data. For example, if a session quantity quota is exhausted or an established session quantity exceeds the second maximum session quantity, session establishment may be rejected; or if the session quantity quota does not exceed the second maximum session quantity, session establishment may be allowed, and one is subtracted from the second maximum session quantity quota.

S810: The first network element sends the target slice identifier and the target PLMN identifier to the third network element.

S811: The third network element collects statistics about an actual data rate corresponding to the target network slice identifier and the target PLMN identifier.

For example, the third network element collects statistics on actual UL/DL data rates of all sessions on an N3 or N6 interface based on the combination of vS-NSSAI+PLMN ID, for example, may be an average data rate in a period. The third network element may periodically report, to the second network element, an actual data rate corresponding to the combination of vS-NSSAI+PLMN ID in the network slice.

S812: The third network element sends the actual data rate to the second network element.

S813: The second network element determines a second maximum data rate for the third network element based on the actual data rate.

For example, if there are a plurality of third network elements, the second network element may aggregate actual UL/DL data rates reported by the third network elements based on the combination of vS-NSSAI+PLMN ID, and the second network element may periodically allocate an overall data rate of a terminal that is allowed by the network slice and that is from the HPLMN to the second maximum data rate of each third network element based on a service volume of each third network element. For example, an additional part of a data rate quota is allocated to a third network element whose actual data rate reported last time is relatively large, and a less part of the data rate quota is allocated to a third network element whose actual data rate reported last time is relatively small. The second network element may indicate the third network element to perform limiting, based on the allocated quota, on an uplink or/and a downlink data rate of a session matching the combination of vS-NSSAI+PLMN ID.

Specifically, the second network element may periodically perform quota allocation, or when determining that an aggregated actual data rate of the combination of vS-NSSAI+PLMN ID reaches a specific threshold, the second network element may start to allocate the second maximum data rate to each third network element based on the actual rate quota of each third network element, and indicate the third network element to perform data rate limiting based on the second maximum data rate. If the data rate is lower than the specific threshold, the second network element may also indicate a UPF to stop performing data rate limiting. The specific threshold may be that a ratio of the actual data rate to a maximum allowed data rate reaches a specific value, or a specific data rate reaches a specific value.

It may be understood that the second network element may allocate a data rate quota based on a device capacity of each third network element, or evenly allocate a data rate quota to each third network element.

S814: The second network element sends the second maximum data rate to the third network element.

S815: The third network element performs session processing based on the second maximum rate.

In this embodiment of this application, the third network element may perform actual data rate limiting on an uplink data packet and/or a downlink data packet of the session matching vS-NSSAI+PLMN ID.

For example, if the third network element determines that actual data rates of all sessions with vS-NSSAI+PLMN ID exceed a quota, the third network element first discards packets of non-guaranteed bit rate (non-GBR) service of these sessions. If the quota is still exceeded, the third network element may further continue to discard a packet that is in a data flow of a guaranteed bit rate (guaranteed bit rate, GBR) service and that exceeds a guaranteed flow bit rate (guaranteed flow bit rate, GFBR).

It should be noted that S802 to S805 in this embodiment of this application may be corresponding to records of S402 to S405 in FIG. 4. Details are not described herein again.

In conclusion, a resource of a roaming area may be controlled based on the first network element, the second network element, and the third network element in the VPLMN. In this way, when a quota is determined, frequent interaction between the VPLMN and the HPLMN is not required, thereby saving a network resource.

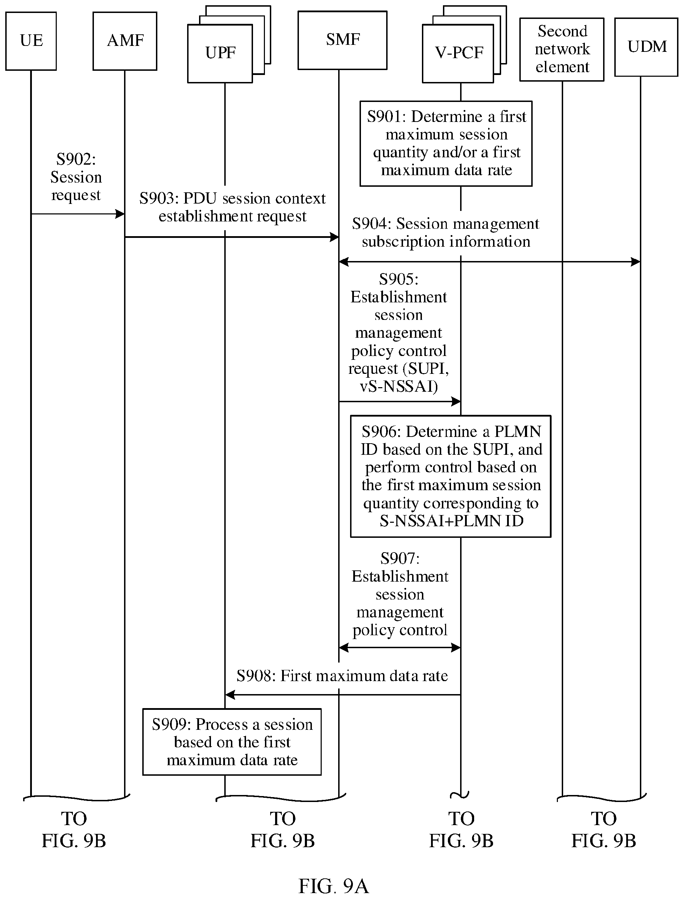

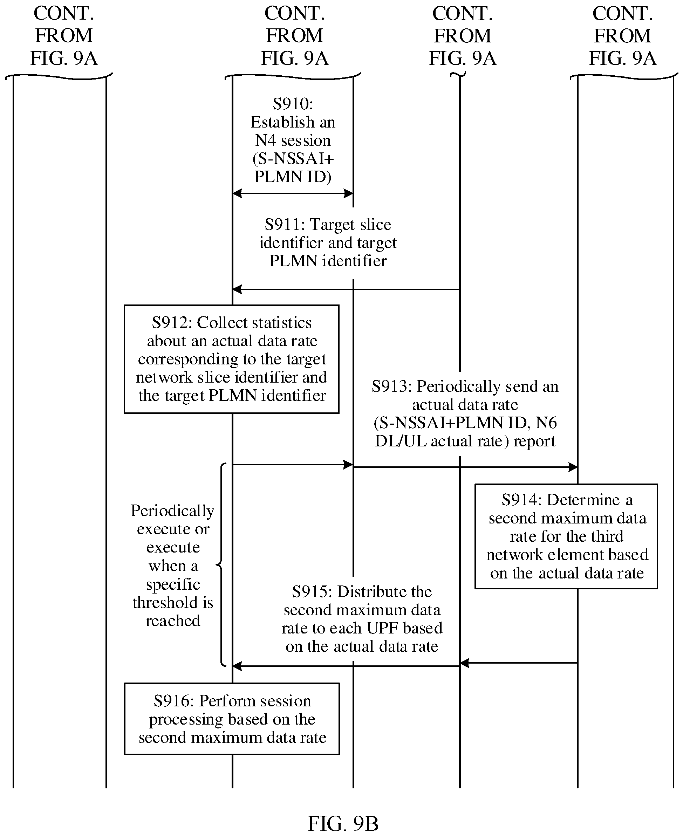

Based on the embodiment corresponding to FIG. 8, in a possible implementation, an example in which the first network element is a PCF network element and the third network element is a UPF network element is used. For example, FIG. 9A and FIG. 9B are a schematic diagram of a specific communication procedure according to an embodiment of this application, including the following steps.

S901: A V-PCF network element determines a first maximum session quantity and/or a first maximum data rate.

S902: UE sends a session request to an AMF network element.

S903: The AMF network element sends a PDU session context establishment request to an SMF network element.

S904: A UDM network element sends session management subscription information to the SMF network element.

S905: The SMF network element sends an establishment session management policy control request (SUPI, vS-NSSAI) to the V-PCF network element.

S906: The V-PCF network element determines a PLMN ID based on an SUPI, and performs control based on the first maximum session quantity corresponding to S-NSSAI+PLMN ID.

S907: The V-PCF network element sends establishment session management policy control to the SMF network element.

S908: The V-PCF network element sends the first maximum data rate to the third network element.

S909: A UPF network element processes a session based on the first maximum data rate.

S910: The UPF network element and the SMF network element establish an N4 session (S-NSSAI+PLMN ID).

For example, in a subsequent session processing procedure, the SMF network element returns a session context establishment response message to the AMF network element. The SMF network element and the UPF network element establish an N4 interface session. If the SMF network element determines, based on an indication of the V-PCF network element, that a current session is limited by a first maximum data rate quota of a network slice, the SMF network element transfers the vS-NSSAI and the PLMN ID that are related to the current session to the UPF network element through an N4 interface.

S911: The V-PCF network element sends a target slice identifier and a target PLMN identifier to the third network element.

S912: The third network element collects statistics about an actual data rate corresponding to the target network slice identifier and the target PLMN identifier.

S913: The third network element periodically sends an actual data rate (S-NSSAI+PLMN ID, N6 DL/LTL actual rate) report to the second network element.

S914: The second network element determines a second maximum data rate for the third network element based on the actual data rate.

S915: The second network element distributes the second maximum data rate (S-NSSAI+PLMN ID, rate limiting quota) to the third network element based on the actual data rate.

S916: The third network element performs session processing based on the second maximum data rate, and performs flow control on a non-BGR flow when the actual rate exceeds a threshold, and optionally may further perform flow control on a part of a GBR flow that exceeds a GFBR.

S901 to S909 in this embodiment of this application may correspond to records of S501 to S509 in FIG. 5, and S911 to S916 in this embodiment of this application may correspond to records of S810 to S815 in FIG. 8. Details are not described herein again. A difference from the embodiment in FIG. 8 is that, in FIG. 8, the first network element may be represented by the V-PCF network element in FIG. 9A and FIG. 9B.

In conclusion, the resource of the roaming area may be controlled based on the AMF network element, the third network element, the SMF network element, the V-PCF network element, the second network element, and the UDM network element in the VPLMN. In this way, when a quota is determined, frequent interaction between the VPLMN and the HPLMN is not required, thereby saving a network resource.

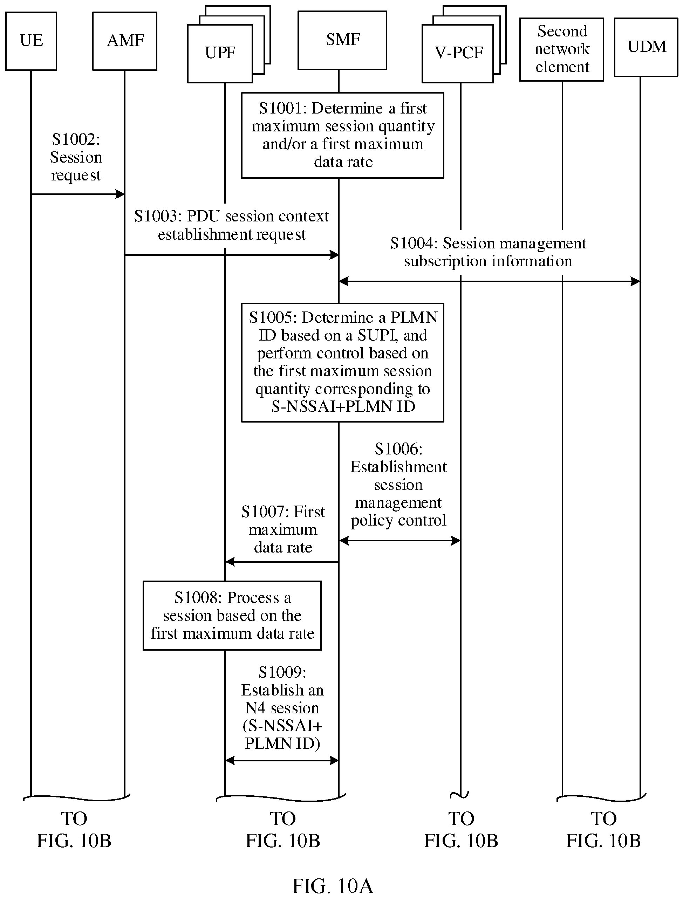

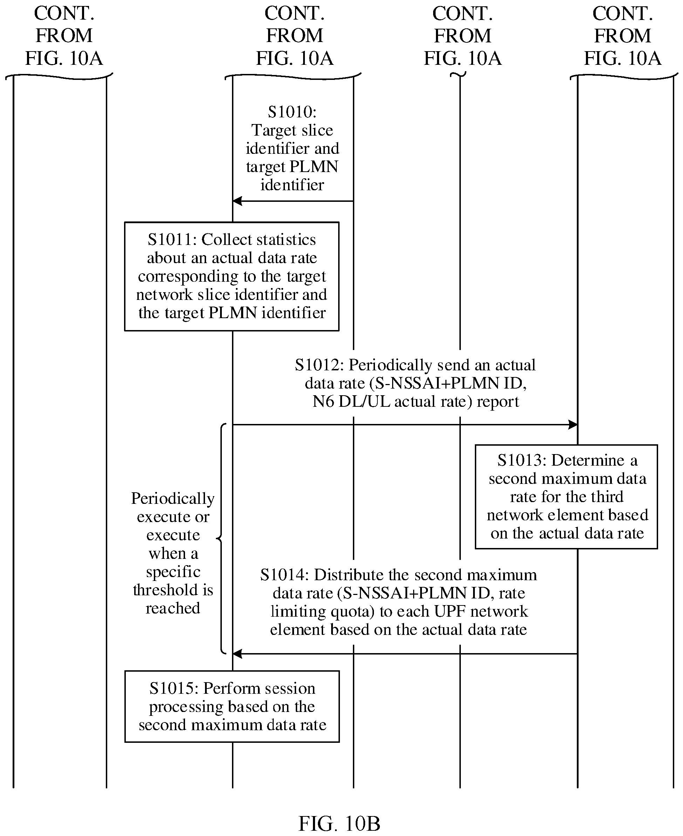

Based on the embodiment corresponding to FIG. 8, in a possible implementation, an example in which the first network element is an SMF network element and the third network element is a UPF network element is used. For example, FIG. 10A and FIG. 10B are a schematic diagram of a specific communication procedure according to an embodiment of this application, including the following steps.

S 1001: The SMF network element determines a first maximum session quantity and/or a first maximum data rate.

S1002: UE sends a session request to an AMF network element.

S1003: The AMF network element sends a PDU session context establishment request to the SMF network element.

S1004: A UDM network element sends session management subscription information to the SMF network element.

S1005: A V-SMF network element determines a PLMN ID based on an SUPI, and performs control based on the first maximum session quantity corresponding to S-NSSAI+PLMN ID. Specifically, the V-SMF network element controls, based on the first maximum session quantity corresponding to the combination of S-NSSAI+PLMN ID, whether to allow establishment of a PDU session. If the establishment is allowed, a subsequent step is performed. Otherwise, the AMF network element sends a response message for rejecting session establishment to the UE.

S 1006: The V-PCF network element establishes session management policy control for the SMF network element.

S1007: The SMF network element sends the first maximum data rate to the UPF network element.

S1008: The UPF network element processes a session based on the first maximum data rate.

S1009: The UPF network element and the SMF network element establish an N4 session (S-NSSAI+PLMN ID).

S1010: The SMF network element sends a target slice identifier and a target PLMN identifier to the UPF network element.

S 1011: The UPF network element collects statistics about an actual data rate corresponding to the target network slice identifier and the target PLMN identifier.

S1012: The UPF network element periodically sends an actual data rate (S-NSSAI+PLMN ID, N6 DL/LTL actual rate) report to the second network element.

S1013: The second network element determines a second maximum data rate for the UPF network element based on the actual data rate.

S1014: The second network element distributes the second maximum data rate (S-NSSAI+PLMN ID, rate limiting quota) to the UPF network element based on the actual data rate.

S1015: The UPF network element performs session processing based on the second maximum data rate, and performs flow control on a non-BGR flow when the actual rate exceeds a threshold, and optionally may further perform flow control on a part of a GBR flow that exceeds a GFBR.

S1001 to S1004 in this embodiment of this application may correspond to records of S901 to S904 in FIG. 9A and FIG. 9B, and S1005 to S1015 in this embodiment of this application may correspond to records of S906 to S916 in FIG. 9A and FIG. 9B. Details are not described herein again. A difference from the embodiment in FIG. 9A and FIG. 9B is that, in FIG. 9A and FIG. 9B, the PCF network element determines the first maximum session quantity and/or the first maximum data rate and the second maximum session quantity and/or the second maximum data rate, and controls the session; and in FIG. 10A and FIG. 10B, the SMF network element determines the first maximum session quantity and/or the first maximum data rate and the second maximum session quantity and/or the second maximum data rate, and controls the session, and adaptively, an interaction procedure between network elements also changes accordingly.

In conclusion, the resource of the roaming area may be controlled based on the AMF network element, the third network element, the SMF network element, the V-PCF network element, the second network element, and the UDM network element in the VPLMN. In this way, when a quota is determined, frequent interaction between the VPLMN and the HPLMN is not required, thereby saving a network resource.

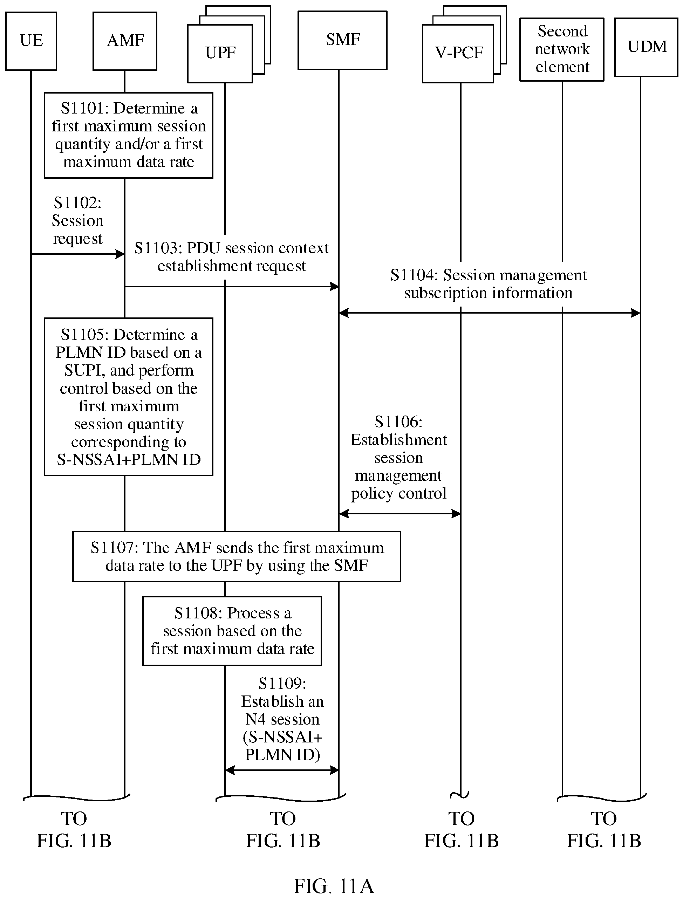

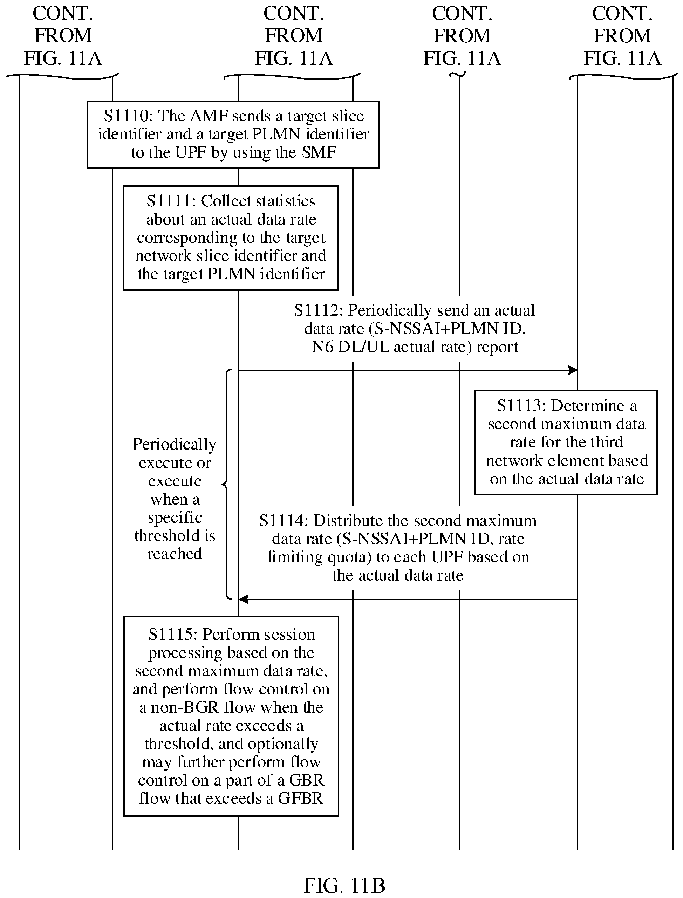

Based on the embodiment corresponding to FIG. 8, in a possible implementation, an example in which the first network element is an AMF network element and the third network element is a UPF network element is used. For example, FIG. 11A and FIG. 11B are a schematic diagram of a specific communication procedure according to an embodiment of this application, including the following steps.

S1101: The AMF network element determines a first maximum session quantity and a first maximum data rate.

S1102: UE sends a session request to the AMF network element.

S1103: The AMF network element sends a PDU session context establishment request to the SMF network element.

S1104: A UDM network element sends session management subscription information to the SMF network element.

S1105: The AMF network element determines a PLMN ID based on an SUPI, and performs control based on the first maximum session quantity corresponding to S-NSSAI+PLMN ID.

S1106: The V-PCF network element establishes session management policy control for the SMF network element.

51107: The AMF network element sends the first maximum data rate to the UPF network element by using the SMF network element.

S1108: The UPF network element processes a session based on the first maximum data rate.

S1109: The UPF network element and the SMF network element establish an N4 session (S-NSSAI+PLMN ID).

S1110: The AMF network element sends a target slice identifier and a target PLMN identifier to the UPF network element by using the SMF network element.

S1111: The UPF network element collects statistics about an actual data rate corresponding to the target network slice identifier and the target PLMN identifier.

S1112: The UPF network element periodically sends an actual data rate (S-NSSAI+PLMN ID, N6 DL/LTL actual rate) report to the second network element.

S1113: The second network element determines a second maximum data rate for the UPF network element based on the actual data rate.

S1114: The second network element distributes the second maximum data rate (S-NSSAI+PLMN ID, rate limiting quota) to the UPF network element based on the actual data rate.

S1115: The UPF network element performs session processing based on the second maximum data rate, and performs flow control on a non-BGR flow when the actual rate exceeds a threshold, and optionally may further perform flow control on a part of a GBR flow that exceeds a GFBR.

S1101 to S1115 in this embodiment of this application may correspond to records of S1001 to S1015 in FIG. 10A and FIG. 10B. Details are not described herein again. A difference from the embodiment in FIG. 10A and FIG. 10B is that, in FIG. 10A and FIG. 10B, the SMFF network element determines the first maximum session quantity and/or the first maximum data rate and the second maximum session quantity and/or the second maximum data rate, and controls the session; and in FIG. 11A and FIG. 11B, the AMF network element determines the first maximum session quantity and/or the first maximum data rate and the second session quantity and/or the second maximum data rate, and controls the session, and adaptively, an interaction procedure between network elements also changes accordingly.

In conclusion, the resource of the roaming area may be controlled based on the AMF network element, the third network element, the SMF network element, the V-PCF network element, the second network element, and the UDM network element in the VPLMN. In this way, when a quota is determined, frequent interaction between the VPLMN and the HPLMN is not required, thereby saving a network resource.

The foregoing describes the methods in embodiments of this application with reference to FIG. 4 to FIG. 11A and FIG. 11B. The following describes communication apparatuses that are provided in embodiments of this application and that perform the foregoing methods. A person skilled in the art may understand that the method and the apparatus may be combined and referenced with each other. The communication apparatus provided in embodiments of this application may perform the steps performed by the first network element in the foregoing communication method. Another communication apparatus may perform the steps performed by the second network element in the communication method in the foregoing embodiment. Another communication apparatus may perform the steps performed by the third network element in the communication method in the foregoing embodiment.

An example in which each function module is obtained through division based on each corresponding function is used below for description.

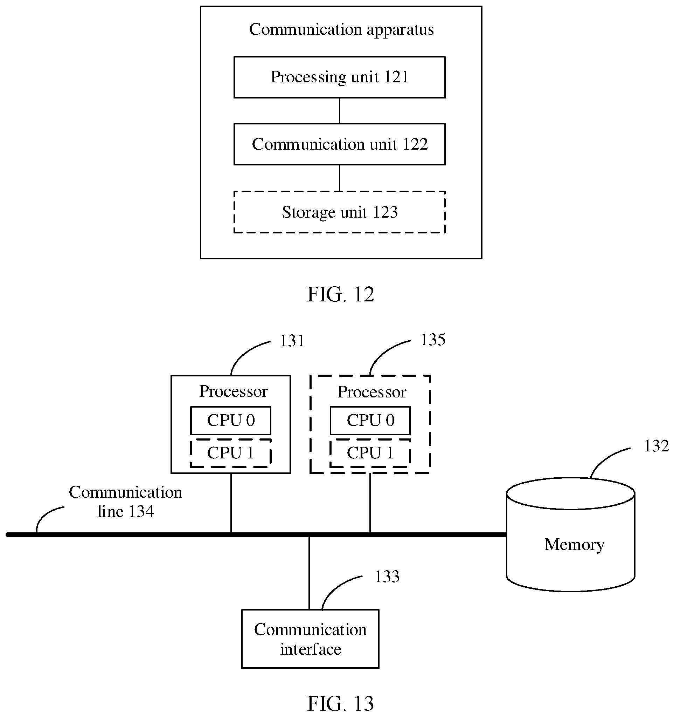

FIG. 12 is a schematic diagram of a structure of a communication apparatus according to an embodiment of this application. The communication apparatus may be a first network element, a second network element, or a third network element in embodiments of this application, or may be a chip applied to the first network element, the second network element, or the third network element. The communication apparatus includes a processing unit 121 and a communication unit 122. The communication unit 122 is configured to support the communication apparatus in performing an information sending or receiving step, and the processing unit 121 is configured to support the communication apparatus in performing an information processing step.

In a possible embodiment, the communication apparatus may further include a storage unit 123. The processing unit 121, the communication unit 122, and the storage unit 123 are connected through a communication bus.

The storage unit 123 may include one or more memories. The memory may be a component configured to store a program or data in one or more devices or circuits.

The storage unit 123 may exist independently, and is connected to the processing unit 121 of the communication apparatus through the communication bus. The storage unit 123 may alternatively be integrated with the processing unit.

The communication apparatus may be used in a communication device, a circuit, a hardware component, or a chip.

For example, the communication apparatus may be a chip or a chip system of the first network element, the second network element, or the third network element in embodiments of this application. In this case, the communication unit 122 may be an input or output interface, a pin, a circuit, or the like. For example, the storage unit 123 may store computer-executable instructions of the method on the first network element side, the second network element side, or the third network element side, so that the processing unit 121 performs the method on the first network element side, the second network element side, or the third network element side in the foregoing embodiment. The storage unit 123 may be a register, a cache, a RAM, or the like. The storage unit 123 may be integrated into the processing unit 121. The storage unit 123 may be a ROM or another type of static storage device that can store static information and instructions, and the storage unit 123 may be independent of the processing unit 121.

An embodiment of this application provides a communication apparatus. The communication apparatus includes one or more modules, configured to implement the methods in the steps included in FIG. 4 to FIG. 11A and

FIG. 11B. The one or more modules may correspond to the steps in the methods in the steps included in FIG. 4 to FIG. 11A and FIG. 11B.

FIG. 13 is a schematic diagram of a hardware structure of a communication device according to an embodiment of this application. For hardware structures of the first network element, the second network element, or the third network element in embodiments of this application, refer to the schematic diagram of the hardware structure of the communication device shown in FIG. 13. The communication device includes a processor 131, a communication line 134, and at least one communication interface (a communication interface 133 is used as an example for description in FIG. 13).

The processor 131 may be a general-purpose central processing unit (central processing unit, CPU), a microprocessor, an application-specific integrated circuit (application-specific integrated circuit, ASIC), or one or more integrated circuits configured to control program execution in the solutions of this application.

The communication line 134 may include a path for transmitting information between the foregoing components.

The communication interface 133 uses any apparatus such as a transceiver, is configured to communicate with another device or a communication network, such as an Ethernet, a wireless local area network (wireless local area networks, WLAN), or a RAN.

Possibly, the communication device may further include a memory 132.

The memory 132 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, this is not limited thereto. The memory may exist independently, and is connected to the processor through the communication line 134. The memory may alternatively be integrated with the processor.

The memory 132 is configured to store computer-executable instructions for executing the solutions of this application, and the processor 131 controls the execution. The processor 131 is configured to execute the computer-executable instructions stored in the memory 132, to implement the policy control method provided in the following embodiments of this application.

Possibly, the computer-executable instructions in this embodiment of this application may also be referred to as application program code. This is not specifically limited in this embodiment of this application.

In a specific implementation, in an embodiment, the processor 131 may include one or more CPUs, for example, a CPU 0 and a CPU 1 in FIG. 13.

In specific implementation, in an embodiment, the communication device may include a plurality of processors, for example, the processor 131 and a processor 135 in FIG. 13. Each of the processors may be a single-core (single-CPU) processor, or may be a multi-core (multi-CPU) processor. The processor herein may be one or more devices, circuits, and/or processing cores configured to process data (for example, computer program instructions).

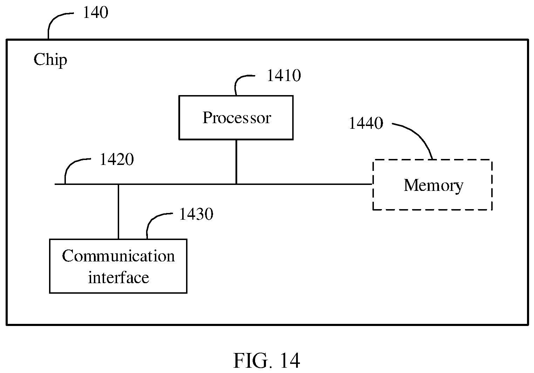

FIG. 14 is a schematic diagram of a structure of a chip 140 according to an embodiment of the present invention. The chip 140 includes one or more (including two) processors 1410 and a communication interface 1430.

In a possible embodiment, the chip 140 shown in FIG. 14 further includes a memory 1440. The memory 1440 may include a read-only memory and a random access memory, and provide operation instructions and data for the processor 1410. A part of the memory 1440 may further include a non-volatile random access memory (non-volatile random access memory, NVRAM).

In some implementations, the memory 1440 stores the following elements: an executable module or a data structure, or a subset thereof, or an extended set thereof.

In this embodiment of the present invention, a corresponding operation is performed by invoking the operation instructions stored in the memory 1440 (the operation instructions may be stored in an operating system).

In a possible implementation, a structure of a chip used by a first network element, a second network element, or a third network element is similar, and different apparatuses may use different chips to implement respective functions.

The processor 1410 controls an operation of the first network element, the second network element, or the third network element. The processor 1410 may also be referred to as a central processing unit (central processing unit, CPU). The memory 1440 may include a read-only memory and a random access memory, and provide instructions and data for the processor 1410. A part of the memory 1440 may further include a non-volatile random access memory (non-volatile random access memory, NVRAM). For example, during application, the memory 1440, the communication interface 1430, and the memory 1440 are coupled together by using a bus system 1420. The bus system 1420 may include a power bus, a control bus, a status signal bus, and the like in addition to a data bus. However, for clear description, various buses are marked as the bus system 1420 in FIG. 14.

The foregoing communication unit may be an interface circuit or a communication interface of the apparatus, and is configured to receive a signal from another apparatus. For example, when the apparatus is implemented as a chip, the communication unit is an interface circuit or a communication interface that is of the chip and that is configured to receive a signal from or send a signal to another chip or apparatus.

The foregoing method disclosed in embodiments of the present invention may be applied to the processor 1410 or implemented by the processor 1410. The processor 1410 may be an integrated circuit chip and has a signal processing capability. In an implementation process, the steps of the foregoing method may be implemented by using an integrated logical circuit of hardware in the processor 1410, or instructions in a form of software. The processor 1410 may be a general-purpose processor, a digital signal processor (digital signal processing, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The processor may implement or perform the methods, the steps, and logical block diagrams that are disclosed in embodiments of the present invention. The general-purpose processor may be a microprocessor, or the processor may be any conventional processor or the like. Steps of the methods disclosed with reference to embodiments of the present invention may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1440, and the processor 1410 reads information in the memory 1440 and completes the steps in the foregoing methods in combination with hardware of the processor.

In a possible implementation, the communication interface 1430 is configured to perform receiving and sending steps of the first network element, the second network element, or the third network element in the embodiments shown in FIG. 4 to FIG. 11A and FIG. 11B. The processor 1410 is configured to perform processing steps of the first network element, the second network element, or the third network element in the embodiments shown in FIG. 4 to FIG. 11A and FIG. 11B.

In the foregoing embodiments, the instructions that are stored in the memory and that are to be executed by the processor may be implemented in a form of a computer program product. The computer program product may be written into the memory in advance, or may be downloaded and installed in the memory in a form of software.

The computer program product includes one or more computer instructions. When the computer program instructions are loaded and executed on a computer, the procedures or functions according to embodiments of this application are fully or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

An embodiment of this application further provides a computer-readable storage medium. The methods described in the foregoing embodiments may be all or partially implemented by software, hardware, firmware, or any combination thereof. If the methods are implemented in the software, functions may be used as one or more instructions or code and stored in the computer-readable medium or transmitted on the computer-readable medium. The computer-readable medium may include a computer storage medium and a communication medium, and may further include any medium that can transfer a computer program from one place to another. The storage medium may be any target medium that can be accessed by a computer.

In a possible design, the computer-readable medium may include a RAM, a ROM, an EEPROM, a CD-ROM or another compact disc storage, a magnetic disk storage or another magnetic storage device, or any other medium that is used to carry or store required program code in a form of instructions or a data structure and that can be accessed by a computer. In addition, any connection is appropriately referred to as a computer-readable medium. For example, if a coaxial cable, an optical fiber cable, a twisted pair, a digital subscriber line (DSL), or wireless technologies (such as infrared, radio, and microwave) are used to transmit software from a website, a server, or another remote source, the coaxial cable, the optical fiber cable, the twisted pair, the DSL, or the wireless technologies such as infrared, radio, and microwave are included in a definition of the medium. Disks and discs used in this specification include optical discs (CD), laser discs, optical discs, DVDs, floppy disks, and blue discs. The disks typically reproduce data magnetically, and the discs reproduce data optically by using laser. The foregoing combinations also need to be included within the scope of the computer-readable medium.

An embodiment of this application further provides a computer program product. The methods described in the foregoing embodiments may be all or partially implemented by software, hardware, firmware, or any combination thereof. If the methods are implemented in the software, all or some of the methods may be implemented in a form of the computer program product. The computer program product includes one or more computer instructions. When the foregoing computer program instructions are loaded and executed on a computer, the procedures or functions according to the foregoing method embodiments are fully or partially generated. The computer may be a general-purpose computer, a special-purpose computer, a computer network, a base station, a terminal, or another programmable apparatus.

The objectives, technical solutions, and beneficial effects of the present invention are further described in detail in the foregoing specific embodiments. It should be understood that the foregoing descriptions are merely specific embodiments of the present invention, but are not intended to limit the protection scope of the present invention. Any modification, equivalent replacement, or improvement made based on the technical solutions of the present invention shall fall within the protection scope of the present invention.

## Claims

1. A communication method, comprising:
determining, by a first network element, a first quota, wherein the first network element is a network element in a visited public land mobile network VPLMN, and the first quota is related to a network slice identifier in the VPLMN and a public land mobile network PLMN identifier in a home public land mobile network HPLMN;
determining, by the first network element, a target PLMN identifier of a terminal device in the HPLMN based on a session-related request, wherein the session-related request comprises a target network slice identifier and an identity of the terminal device; and
determining, by the first network element, a target quota from the first quota based on the target network slice identifier and the target PLMN identifier.

2. The method according to claim 1, wherein the first quota comprises a first maximum session quantity and/or a first maximum data rate.

3. The method according to claim 1 or 2, wherein the first quota comprises a plurality of groups of association relationships, the association relationship comprises a relationship between the quota and each of the network slice identifier and the PLMN identifier, and the identity of the terminal device corresponds to one PLMN identifier.

4. The method according to any one of claims 1 to 3, wherein the determining, by a first network element, a first quota comprises:
receiving, by the first network element, the first quota from a second network element, wherein the second network element comprises an operation administration and maintenance OAM network element, or the second network element comprises a quota control function.

5. The method according to claim 4, further comprising:
sending, by the first network element, the target network slice identifier and the target PLMN identifier to a third network element;
receiving, by the first network element, an actual data rate corresponding to the target network slice identifier and the target PLMN identifier from the third network element; and
sending, by the first network element, the actual data rate to the second network element.

6. The method according to claim 4 or 5, further comprising:
determining, by the first network element, an actual session quantity corresponding to the target network slice identifier and the target PLMN identifier; and
determining, by the first network element based on the target quota and the actual session quantity, to allow or reject the session-related request.

7. The method according to claim 6, further comprising:
sending, by the first network element, the actual session quantity to the second network element.

8. A communication method, comprising:
determining, by a second network element, a first quota of a first network element, wherein the first network element is a network element in a visited public land mobile network VPLMN, and the first quota is related to a network slice identifier in the VPLMN and a public land mobile network PLMN identifier in a home public land mobile network HPLMN; and
sending, by the second network element, the first quota to the first network element.

9. The method according to claim 8, wherein the first quota comprises a maximum session quantity and/or a maximum data rate.

10. The method according to claim 8 or 9, wherein the first quota comprises a plurality of groups of association relationships, the association relationship comprises a relationship between the quota and each of the network slice identifier and the PLMN identifier, and an identity of a terminal device corresponds to one PLMN identifier.

11. The method according to either of claim 9 and 10, further comprising:
receiving, by the second network element, an actual data rate corresponding to a target network slice identifier and a PLMN identifier from a third network element;
determining, by the second network element, a second maximum data rate for the third network element based on the actual data rate; and
sending, by the second network element, the second maximum data rate to the third network element.

12. The method according to claim 11, wherein there are a plurality of third network elements, and the determining, by the second network element, a second maximum data rate for the third network element based on the actual data rate comprises:
aggregating, by the second network element, actual data rates of the plurality of third network elements to obtain an aggregated actual data rate; and
when the aggregated actual data rate reaches a proportion threshold of a first maximum data rate, determining, by the first network element, the second maximum data rate for each third network element based on the actual data rate of each third network element.

13. The method according to either of claim 9 and 10, further comprising:
receiving, by the second network element, an actual session quantity corresponding to a target network slice identifier and a PLMN identifier from the first network element;
determining, by the second network element, a second maximum session quantity for the third network element based on the actual session quantity; and
sending, by the second network element, the second maximum session quantity to the first network element.

14. A communication method, comprising:
receiving, by a third network element, a target network slice identifier and a target PLMN identifier from a first network element, wherein the first network element is a network element in a visited public land mobile network VPLMN, and the target PLMN identifier is an identifier of a terminal device in a home public land mobile network HPLMN;
collecting, by the third network element, statistics about an actual data rate corresponding to the target network slice identifier and the target PLMN identifier;
sending, by the third network element, the actual data rate to a second network element;
receiving, by the third network element, a second maximum data rate from the second network element, wherein the maximum data rate is related to the actual data rate; and
performing, by the third network element, session processing based on the second maximum data rate.

15. The method according to claim 14, wherein the performing, by the third network element, session processing based on the second maximum data rate comprises:
when a data rate of a session exceeds the second maximum data rate, discarding, by the third network element, some packets.

16. A communication apparatus, comprising a processor and a communication interface, wherein
the communication interface is configured to perform a receiving and sending operation in the communication method according to any one of claims 1 to 7, or perform a receiving and sending operation in the communication method according to any one of claims 8 to 13, or perform a receiving and sending operation in the communication method according to any one of claims 14 to 15; and the processor runs instructions to perform a processing or control operation in the communication method according to any one of claims 1 to 7, or perform a processing or control operation in the communication method according to any one of claims 8 to 13, or perform a processing or control operation in the communication method according to any one of claims 14 to 15.

17. A chip, wherein the chip comprises at least one processor and a communication interface, the communication interface is coupled to the at least one processor, and the at least one processor is configured to run a computer program or instructions to implement the communication method according to any one of claims 1 to 7, or implement the communication method according to any one of claims 8 to 13, or implement the communication method according to any one of claims 14 to 15; and the communication interface is configured to communicate with another module other than the chip.

18. A computer-readable storage medium, wherein the computer-readable storage medium stores instructions, and when the instructions are run, the communication method according to any one of claims 1 to 7 is implemented, or the communication method according to any one of claims 8 to 13 is implemented, or the communication method according to any one of claims 14 to 15 is implemented.
